(19) Europäisches Patentamt
European Patent Office
Office européen des brevets

(11) **EP 2 418 511 A1**

(12) **EUROPEAN PATENT APPLICATION**
published in accordance with Art. 153(4) EPC

(43) Date of publication:
**15.02.2012 Bulletin 2012/07**

(21) Application number: **09843103.4**

(22) Date of filing: **12.10.2009**

(51) Int Cl.:
*G01S 15/06* (2006.01)    *H04J 11/00* (2006.01)

(86) International application number:
**PCT/KR2009/005840**

(87) International publication number:
**WO 2010/117116 (14.10.2010 Gazette 2010/41)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.04.2009   KR 20090031548
30.04.2009   KR 20090038564
24.06.2009   KR 20090056705
24.06.2009   KR 20090056708
01.07.2009   KR 20090059978**

(71) Applicant: **Pantech Co., Ltd.
Seoul 121-270 (KR)**

(72) Inventors:
• **YOON, Sungjun**
  **Seoul 133-122 (KR)**
• **KWON, Kibum**
  **Ansan-si**
  **Gyeonggi-do 426-160 (KR)**
• **SUH, Sung-jin**
  **Seoul 137-070 (KR)**
• **KIM, Kitae**
  **Suwon-si**
  **Gyeonggi-do 442-190 (KR)**

(74) Representative: **Jordan, Volker Otto Wilhelm et al
Weickmann & Weickmann
Patentanwälte
Postfach 860 820
81635 München (DE)**

(54) **METHOD FOR GENERATING SIGNAL PATTERN USING MODULUS OR SEQUENCE, AND DEVICE THEREOF**

(57)     Disclosed are a method and an apparatus for generating signal patterns used for a transmission/reception process between a terminal and a base station by using a modular sonar sequence.

*FIG.20*

**Description**

CROSS-REFERENCE TO RELATED APPLICATION

This application claims priority from and the benefit under 35 U.S.C. §119(a) of Korean Patent Application Nos. 10-2009-0031548, 10-2009-0038564, 10-2009-0056705, 10-2009-0056708, and 10-2009-0059978, filed on April 10, 2009, April 30, 2009, June 24, 2009, June 24, 2009, and July 1, 2009, respectively, which are hereby incorporated by reference for all purposes as if fully set forth herein.

BACKGROUND

FIELD OF THE INVENTION
Embodiments of the present invention relate to a method and an apparatus for generating a signal pattern used in a transmission/reception process between a terminal and a base station in a wireless communication system. More particularly, embodiments of the present invention relate to a method and an apparatus for generating a cell-specific Positioning Reference Signal (PRS) pattern, which is a signal pattern used to measure a location of a UE (User Equipment) through a reference signal (or a pilot) in an OTDOA (Observed Time Difference Of Arrival) manner in an OFDM (Orthogonal Frequency Division Multiplexing) based wireless mobile communication system, among signal patterns.
DISCUSSION OF THE BACKGROUND
A terminal or a base station transmits and receives a predetermined signal in a specific time and frequency band for a channel estimation, a position estimation, and a transmission/reception of information for control information or a scheduling required for a process of wireless communication between the terminal and the base station. That is, the terminal or the base station may insert a specific signal or symbol into a 2-dimentional domain grid of a time/frequency at regular intervals or irregular intervals. A form in which the specific signal is inserted into a 2-dimensional region of a time/frequency corresponds to a signal pattern. For example, a Reference Signal (RS) is transmitted in a specific time and frequency band for a frequency domain channel estimation, and a rule for the specific time and frequency band in which the reference signal is transmitted corresponds to a reference signal pattern.
The present invention relates to a technology of forming the signal patterns by using a modular sonar sequence. More particular, the present invention relates to a technology of forming a cell-specific positioning reference signal pattern, which is a signal pattern used to measure a position of a UE through a reference signal in an OTDOA manner in an OFDM based wireless communication system.

SUMMARY

Additional features of the invention will be set forth in the description which follows, and in part will be apparent from the description, or may be learned by practice of the invention.
Exemplary embodiments of the present invention disclose a method of generating a signal pattern in a wireless communication system including one or more base stations and one or more User Equipments (UEs), each of the base station and UEs including one or more antennas and transmitting and receiving a particular signal including one or more symbols in resource blocks, each of the resource blocks including a plurality of Orthogonal Frequency Division Multiplexing (OFDM) subcarriers and a plurality of OFDM symbols in one time slot within a radio frame, the radio frame including a plurality of subframes, the method including forming a pattern of the particular signal from the second MxN modular sonar sequence and mapping the signal, and an apparatus and a transmission/reception device thereof.
Further, a method of using a sequence having the same characteristic as that of the MxN modular sonar sequence in generating signal patterns, and an apparatus and a transmission/reception device thereof.
It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 illustrates an apparatus for forming a Positioning Reference Signal (PRS) pattern by using a M × N modular sonar sequence according to an aspect of the present invention;
FIGs. 2 and 3 illustrate an embodiment in a structure of an MBSFN (Multicast Broadcast Single Frequency Network) subframe of an LTE (Long Term Evolution) system according to the aspect of the present invention;
FIG. 5 illustrates an embodiment in a structure of a normal subframe having a normal CP (Cyclic Prefix) of an LTE system according to the aspect of the present invention;

FIG. 6 illustrates an embodiment in a structure of a normal subframe having an extended CP of an LTE system according to the aspect of the present invention;

FIGs. 7 and 8 illustrate another embodiment in the structure of the normal subframe having the extended CP of an LTE system according to the aspect of the present invention;

FIG. 9 illustrates an apparatus for forming a PRS pattern by using an M × (N-N') modular sonar sequence according to another aspect (second aspect) of the present invention;

FIGs. 10 and 13 illustrate an embodiment in the structure of the MBSFN subframe of an LTE system according to another aspect of the present invention;

FIGs. 11 and 14 illustrate an embodiment in the structure of the normal subframe having the normal CP of an LTE system according to another aspect of the present invention;

FIGs. 12 and 15 illustrate an embodiment in the structure of the normal subframe having the extended CP of an LTE system according to another aspect of the present invention;

FIG. 16 illustrate structures of a frame, in which a positioning reference signal pattern is formed in one or more subframes, and a subframe according to another embodiment of the present invention;

FIG. 17 illustrates a signal generation structure of a downlink physical channel in a wireless communication system to which embodiments of the present invention are applied;

FIG. 18 illustrates a structure of a receiver in a wireless communication system; and

FIGs. 19 and 20 illustrate an embodiment in a structure a normal subframe having the normal CP and the extended CP of an LTE system according to still another aspect of the present invention.

## DETAILED DESCRIPTION OF THE ILLUSTRATED EMBODIMENTS

The above and other objects, features and advantages of the present invention will be more apparent from the following detailed description taken in conjunction with the accompanying drawings, in which:

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough and complete, and will fully convey the scope of this disclosure to those skilled in the art. Various changes, modifications, and equivalents of the systems, apparatuses, and/or methods described herein will likely suggest themselves to those of ordinary skill in the art. Elements, features, and structures are denoted by the same reference numerals throughout the drawings and the detailed description, and the size and proportions of some elements may be exaggerated in the drawings for clarity and convenience.

An object of the present invention is to provide a new effective method of forming patterns of signals transmitted and received by a terminal or a base station in a specific time and frequency band for a channel estimation, a position estimation, and a transmission/reception of information for control information or a scheduling required for a process of wireless communication between the terminal and the base station.

Further, an object of the present invention is to provide a new effective method of constructing a reference signal for the positioning in a new resource allocation structure where a communication infrastructure is changed from an existing asynchronous CDMA-based WCDMA method to OFDM-based multiplexing method and access method in detecting a UE (User Equipment) location through a reference signal (or a pilot) for the positioning in an OTDOA (Observed Time Difference Of Arrival) manner in the OFDM (Orthogonal Frequency Division Multiplexing)-based wireless mobile communication system.

An object of the present invention is to provide excellent PRS (Positioning Reference Signal) patterns in an aspect of the number of distinct cell-specific patterns and the performance for a more accurate positioning method required by the development of a communication system such as an increase in a movement velocity of a UE, a change in an interference environment between base stations, and an increase in complexity, in the OFDM (Orthogonal Frequency Division Multiplexing)-based wireless mobile communication system.

In order to achieve the above objects, the present invention provides a method of generating signal patterns having different patterns specific for each cell in a resource allocation structure by using the modular sonar sequence. Accordingly, greatly more patterns according to system-specific information may be generated in comparison with a conventional method in an aspect of the number of distinct patterns, and although each pattern is cyclic-delayed on a time (a symbol in an OFDM structure) axis or a frequency (a subcarrier in an OFDM structure) axis, errors generated by overlapping with an original pattern may be reduced in comparison with a conventional method in an aspect of distinct performances.

The present invention provides a method of generating signal patterns having different patterns specific for each cell by using the modular sonar sequence and allocating the generated signal patterns to one or more subframes.

An effect of a method of generating a Positioning Reference Signal (PRS) pattern by using the aforementioned modular sonar sequence, which is one embodiment of the present invention, is described below.

According to the method of generating the PRS pattern by using the modular sonar sequence, although each pattern is cyclic-delayed on a time (a symbol in an OFDM structure) axis or a frequency (a subcarrier in an OFDM structure) axis, errors generated by overlapping with an original pattern may be reduced in comparison with a conventional method and positioning reference signal patterns having greatly more different patterns specific for each base station (cell) may be generated in a resource allocation structure in comparison with the conventional method.

Positioning methods of providing various location services in a WCDMA (Wideband Code Division Multiple Access) and location information required for communication are largely based on three methods, which are a cell coverage-based positioning method, an OTDOA-IPDL (Observed Time Difference Of Arrival-Idle Period DownLink) method, and a network-assisted GPS method. Each method is complementary to each other rather than competitive, and properly used according to a different objective.

Among the three methods, the OTDOA method is based on measuring relative arrival times of reference signals (or pilots) from different base stations (or cells) while moving. A UE (or MS (Mobile Station)) should receive corresponding reference signals (RS) from at least three different base stations (or cells) for a location calculation. In order to make an OTDOA location measurement easy and avoid a near-far problem, the WCKMA standard includes an IPDL (Idle Periods in DownLink). Although a RS (or a pilot) from a serving cell, in which a current UE is located, on the same frequency is strong (or MS), the UE should be able to receive an RS (or a pilot) from a neighbor cell during the idle periods.

In a positioning through the OTDOA method, the accuracy of the measurement is based on 1) the number of base stations (or cells), which can receive an RS (or a pilot) discriminated by a UE (or MS) (the number should be more than three and the accuracy may be increased as the number of base stations is increased), 2) a relative location of a base station (the accuracy may be increased when the base station is located in a different direction from a UE), and 3) a line-of-sight (when the UE and the base station are location in line-of-sight from each other, the accuracy may be increased). That is, when a UE or a base station on each network receives a RS (or a pilot) from a neighbor cell, the UE or the base station should be able to discriminate RSs transmitted from neighbor cells to receive the discriminated RSs. When the number of distinct RSs is increased and the performance of the RSs is improved, the three considerations may be satisfied. In other words, as the number of base station (cell)-specific RSs (or pilots), which have distinct excellent performances, is increased, 1) the number of base stations, which can be received, is increased, 2) a possibility that at least three base stations, which are positioned in a relatively better location, can be selected among the base stations is stochastically increased, and 3) a possibility that at least three base stations, which are positioned in a relatively better lint-of-sight, can be selected among the base stations is stochastically increased, so that a correct location information may be obtained through a more accurate OTDOA measurement.

An LTE system advanced from WCDMA affiliated with 3GPP is based on an OFDM (Orthogonal Frequency Division Multiplexing) unlike asynchronous CDMA (Code Division Multiple Access) scheme of WCDMA. As the positioning performed through an OTDOA method in the WCDMA, a new LTE system considers the positioning performed based on the OTDOA method. Accordingly, a method is considered in which data regions, which are the remaining regions except control regions for existing Reference Signals (RSs) and control channels, are reserved on a regular period in one of an MBSFN (Multicast Broadcast Single Frequency Network) subframe structure and a normal subframe structure, or each subframe structure of both subframes and then reference signals for the positioning is transmitted to the reserved regions in the subframes. That is, for the positioning in an LTE, which is a new next generation communication method based on the OFDM method, a method of transmitting reference signals for the positioning and constructing the reference signals in a new resource allocation structure should be reconsidered since a communication infrastructure has been changed from an existing asynchronous CDMA-based WCDMA method to OFDM-based multiplexing method and access method. Further, a more accurate positioning method is required by the development of a communication system such as an increase in a movement velocity of a UE, a change in an interference environment between base stations, and an increase in complexity.

An embodiment of the present invention provides a method of generating a positioning reference signal pattern by using the modular sonar sequence.

In accordance with an aspect of the present invention, there is provided a method of generating a positioning reference signal pattern for positioning a User Equipment (UE) in a wireless communication system, the method including generating a first MxN modular sonar sequence based on M and N corresponding to determined modular sonar sequence sizes, converting the generated first MxN modular sonar sequence to a second MxN modular sonar sequence according to system-specific information, and forming a positioning reference signal pattern from the second MxN modular sonar sequence and mapping positioning reference signals.

In accordance with another aspect of the present invention, there is provided a method of generating a positioning reference signal pattern for positioning a User Equipment (UE) in a wireless communication system, the method including generating a first MxN modular sonar sequence based on M and N corresponding to determined modular sonar sequence sizes, generating a first $M \times (N-N')$ modular sonar sequence by truncating an end part having a length N' out of the generated first MxN modular sonar sequence having a length N, converting the first $M \times (N-N')$ modular sonar sequence to a second M×(N-N') modular sonar sequence according to system-specific information, and forming a positioning reference signal pattern from the second M×(N-N') modular sonar sequence and mapping positioning reference signals.

In accordance with another aspect of the present invention, there is provided a method of generating a positioning reference signal pattern for positioning a User Equipment (UE) in a wireless communication system, the method including generating a first MxN modular sonar sequence based on M and N corresponding to determined modular sonar sequence sizes, converting the generated first MxN modular sonar sequence to a second MxN modular sonar sequence according to system-specific information, generating a second M×(N-N') modular sonar sequence by truncating an end part having a length N' out of the second MxN modular sonar sequence having a length N, and forming a positioning reference signal pattern from the second M×(N-N') modular sonar sequence and mapping positioning reference signals.

In accordance with another aspect of the present invention, there is provided an apparatus for generating a positioning reference signal pattern for positioning a User Equipment (UE) in a wireless communication system, the apparatus including an MxN modular sonar sequence generator for generating a first MxN modular sonar sequence based on M and N corresponding to determined modular sonar sequence sizes, and converting the generated first MxN modular sonar sequence to a second MxN modular sonar sequence according to system-specific information, and a positioning reference signal mapper for forming a positioning reference signal pattern from the second MxN modular sonar sequence and mapping positioning reference signals.

In accordance with another aspect of the present invention, there is provided an apparatus for generating a positioning reference signal pattern for positioning a User Equipment (UE) in a wireless communication system, the apparatus including an MxN modular sonar sequence generator for generating a first MxN modular sonar sequence based on M and N corresponding to determined modular sonar sequence sizes, an M×(N-N') modular sonar sequence generator for generating a first M×(N-N') modular sonar sequence by truncating an end part having a length N' out of the generated first MxN modular sonar sequence having a length N, and converting the first M×(N-N') modular sonar sequence to a second M×(N-N') modular sonar sequence according to system-specific information, and a positioning reference signal mapper for forming a positioning reference signal pattern from the second M×(N-N') modular sonar sequence and mapping positioning reference signals.

In accordance with another aspect of the present invention, there is provided an apparatus of generating a positioning reference signal pattern for positioning a User Equipment (UE) in a wireless communication system, the apparatus including an MxN modular sonar sequence generator for generating a first MxN modular sonar sequence based on M and N corresponding to determined modular sonar sequence sizes, an M×(N-N') modular sonar sequence generator for converting the generated first MxN modular sonar sequence to a second MxN modular sonar sequence according to system-specific information, and generating a second M×(N-N') modular sonar sequence by truncating an end part having a length N' out of the second MxN modular sonar sequence having a length N, and a positioning reference signal mapper for forming a positioning reference signal pattern from the second M×(N-N') modular sonar sequence and mapping positioning reference signals.

Specifically, the present invention provides an effective method of constructing a reference signal for the positioning in a new resource allocation structure where a communication infrastructure is changed from an existing asynchronous CDMA-based WCDMA method to OFDM-based multiplexing method and access method in detecting a UE (User Equipment) location through a reference signal (or a pilot) for the positioning in an OTDOA (Observed Time Difference Of Arrival) manner in the OFDM (Orthogonal Frequency Division Multiplexing)-based wireless mobile communication system. Particularly, the present invention provides excellent PRS (Positioning Reference Signal) patterns in an aspect of the number of distinct cell-specific patterns and the performance for more accurate positioning method required by the development of a communication system such as an increase in a movement velocity of a UE, a change in an interference environment between base stations, and an increase in complexity.

Accordingly, the present invention considers a method of generating a positioning reference signal according to the requirements based on the modular sonar sequence.

The modular sonar sequence described herein is first discussed below.

For integers m and n, M={1, 2,..., m} and N={1, 2,..., n} (where, M is a set including values generated by modulo m of integers). For all integers h, i, and j where $1 \leq h \leq n-1$, $1 \leq i$, and $j \leq n-h$, when i=j from f(i+h)-f(i)=f(j+h)-f(j) (mod m), a function f: N→M has a difference property discriminated by a modular (hereinafter, referred to as a "distinct modular differences property").

At this time, an M x N modular sonar sequence corresponds to the function f: N→M having the "distinct modular differences property".

For example, a sequence {1, 3, 7, 4, 9, 8, 6, 2, 5, 11(=0)} may be a 11 x 10 modular sonar sequence having a value of "11" as a modular.

There are various methods of generating modular sonar sequences. Table 1 below summarizes and illustrates all methods of generating the modular sonar sequence known today according to a length, a range, and modulo value. Detailed methods of generating the modular sonar sequence in each method correspond to from generation method-A to generation method-G.

[Table 1]

| Constructions | Length (N) | Range | Modulo(M) | method |
|---|---|---|---|---|
| Quadratic | n=p+1 | {1,2,...,p} | m=p | generation method-A |
| Exponential Welch | n=p-1 | {1,2,...,p} | m=p | generation method-B |
| Logarithm Welch | n=p-1 | {1,2,...,p-1} | m=p-1 | generation method-C |
| Lempel | n=p^r-2 | {1,2,...,p^r-1} | m=p^r-1 | generation method- D |
| Golomb | n=p^r-2 | {1,2,...,p^r-1} | m=p^r-1 | generation method-E |
| Extended Exponential Welch | n=p | {1,2,...,p} | m=p | generation method-F |
| Shift Sequence | n=p^r | {1,2,...,p^r-1} | m=p^r-1 | generation method -G |

1) Generation method-A (Quadratic): p is an odd prime number, and, when a, b, and c are integers which are not "0" generated by performing modulo p, a function f:{1, 2,..., p+1}→{1, 2,..., p} defined as $f(i)=ai^2+bi+c \pmod p$ corresponds to a p×(p-1) modular sonar sequence.

2) Generation method-B (Exponential Welch): when a is a modular primitive element for a prime number p, a function f: {1, 2,..., p-1}→{1, 2,..., p} defined as $f(i)=a^i$ corresponds to a p x (p-1) modular sonar sequence.

3) Generation method-C (Logarithmic Welch): when a is a modular primitive element for a prime number p, a function f: {1, 2,..., p-1}→{1, 2,..., p-1} defined as $f(i)=\log_a i$ corresponds to a (p-1) × (p-1) modular sonar sequence.

4) Generation method-D (Lempel): $q= p^r>2$ is a prime power. When a is a primitive element on $GF(p^r)$, a function f:{1, 2,..., $p^r$-2}→{1, 2,..., $p^r$-1} defined as a necessary and sufficient condition of $a^i+a^j=1$ is a ($p^r$-1) × ($p^r$-2) modular sonar sequence.

5) Generation method-E (Golomb): $q=p^r>2$ is a prime power. When a and b are primitive elements on $GF(p^r)$, a function f: {1,2,..., $p^r$-2}→{1, 2,..., $p^r$-1} defined as a necessary and sufficient condition of f(i)=j and $a^i+b^j=1$ corresponds to a ($p^r$-1) × ($p^r$-2) modular sonar sequence.

6) Generation method-F (Extended Exponential Welch): when a is a modular primitive element for a prime number p and s is an integer, a function f: {1,2,..., p-1}→{1,2,..., p} defined as $f(i)=a^{i+s}$ corresponds to a p × p modular sonar sequence.

7) Generation method-G (Shift sequence): Suppose p is a prime number and a and b are primitive elements on $GF(p^{2r})$ and $GF(p^r)$, respectively. Here, when p is 2, a function f: {1, 2,..., $p^r$}→{1, 2,..., $p^r$-1} is defined as $f(i)=\log_b(a^i)^{p^r}+a^i=Tr^{2r}_r(a^i)$, and $b^{f(i)}=(a^i)^{p^r}+a^i=Tr^{2r}_r(a^i)$. When p is an odd number, the function f corresponds to a ($p^r$-1) × $p^r$ modular sonar sequence where the function f is defined similarly as a case when p is 2, but a range of i is {i:-($p^r$-1)/2≤i ≤($p^r$-1)/2}.

The sequence {1, 3, 7, 4, 9, 8, 6, 2, 5, 11} described above as an example is generated by cyclic-shifting a sequence {2, 4, 8, 5, 10, 9, 7, 3, 6, 1} by -1, and the 11 × 10 modular sonar sequence {2, 4, 8, 5, 10, 9, 7, 3, 6, 1} may be constructed by the Exponential Welch method (a detailed generation method may be drawn from a case where a is 2 in generation method-B (Exponential Welch)) in table 1. As shown in table 1, a modular M has a value of "11" which is a prime number, and a length L has a value of "10" which is obtained by 11-1.

M × N modular sonar sequences may be converted to different M × N modular sonar sequences through three transformations.

First, when an original generated M × N modular sonar sequence is f(i), 1≤i≤N (or 0≤i≤N-1), a is added to f(i) for modulo m. The above function is represented as equation 1 below.

$$f_{+a}(i)=f(i)+a \pmod m \quad\quad\quad\quad (1)$$

Equation 1 indicates that a row of a modular sonar array (representing a modular sonar sequence as a two-dimension having a row and a column) is cyclic-rotated in the unit of a. That corresponds to all cyclic shifts in a frequency side of a sequence pattern one to one in a two-dimension pattern of a time/frequency.

Second, when the original generated M × N modular sonar sequence is f(i), 1≤i≤N (or 0≤i≤N-1), u is multiplied by f(i) for modular m. The above function is represented as equation 2 below.

$$f_{\times u}(i) = uf(i) \pmod{m} \quad \text{.................................................... (2)}$$

Equation 2 refers to a permutation of rows of the modular sonar array. When a is "0", that corresponds to all cyclic shifts in a time side of a sequence pattern one to one in a two-dimension pattern of a time/frequency.
Third, when the original generated M x N modular sonar sequence is f(i), $1 \leq i \leq N$ (or $0 \leq i \leq N-1$), f(i) is sheared in the unit of s for modulo m. The above function is represented as equation 3 below.

$$\hat{f}_{shear(s)}(i) = f(i) + si \pmod{m} \quad \text{.................................................... (3)}$$

Equation 3 indicates that columns of the modular sonar array are sheared in the unit of s.
In short, the function f corresponds to the $M \times N$ modular sonar sequence. If u is the unit of the modular m, g may be defined as equation 4 below, and g also corresponds to the $M \times N$ modular sonar sequence.

$$g(i) = uf(i) + si + a \pmod{m} \quad \text{.................................................... (4)}$$

The present invention forms a pattern of a Positioning Reference Signal (PRS) by using the modular sonar sequence.
A method of forming the pattern of the PRS by using the modular sonar sequence according to an aspect (first aspect) of an embodiment of the present invention is described below.
a. Modular sonar sequence sizes M and N are determined from combinations capable of using as many available rows and columns as possible from Ms and Ns combinable in table 1 and in consideration of numbers of rows and columns available for positioning reference signals in a two dimensional single subframe structure having a frequency axis (a symbol axis in an OFDM structure) and a time (a subcarrier axis in an OFDM structure) axis for each subframe (e.g. an MBSFN subframe, a normal subframe with a normal CP, and a normal subframe with an extended CP).
b. Based on the selected M and N, the $M \times N$ modular sonar sequence is generated by the construction method illustrated in table 1.
c. According to the generated modular sonar sequence, positioning reference signals in a two dimensional single subframe structure having a frequency axis (a symbol axis in an OFDM structure) and a time (a subcarrier axis in an OFDM structure) axis for each subframe are mapped to rows and columns available for the positioning reference signals.
For example, when the generated $M \times N$ modular sonar sequence is {a, b, c,..., j,...}, {(x,y) (x_1,y_1)=(1,a), (x_2,y_2)=(2,b), (x_3,y_3)=(3,c),..., (x_i,y_i)=(i,j),...}, and an ith sequence value of the PRS is mapped to a position where an xth (or yth) available column (symbol axis) and a yth (or xth) available row (subcarrier axis) intersect. In other words, when the ith sequence value of the generated $M \times N$ modular sonar sequence is f(i)=j, the ith sequence value of the PRS for the subframe is mapped to a position where an ith available column (symbol axis) and a f(i)th available row (subcarrier axis) intersect, or a position where a f(i)th available column (symbol axis) and an ith available row (subcarrier axis) intersect.
d. Different PRS sequence patterns required for each base station (or cell), each relay node, or each UE (or MS) are generated through the following methods.
When the $M \times N$ modular sonar sequence generated through one method in table 1 corresponds to f(i), $1 \leq i \leq N$ (or $0 \leq i \leq N-1$), f(i) may be changed to the following three functions.

- Addition by a modulo m, $f_{+a}(i) = f(i) + a \pmod{m}$
- Multiplication by a unit u modulo m, $f_{\times u}(i) = uf(i) \pmod{m}$
- Shearing by s modulo m, $f_{shear(s)}(i) = f(i) + si \pmod{m}$

By adding the three changed functions together, a new $M \times N$ modular sonar sequence corresponding to a function g(i), which is g(i)=uf(i)+si+a (mod m), $1 \leq i \leq N$ (or $0 \leq i \leq N-1$), may be generated. Through the new $M \times N$ modular

sonar sequence, sequence patterns of different PRSs may be generated.

At this time, a, u, and s may be determined by a function according to a base station (or cell), a relay node, a UE (or MS), or other specific information (a subframe number, a CP (Cyclic Prefix) size, etc.). Particularly, it can be seen that different patterns for each base station (or cell) (cell-specific patterns) may be generated from the fact that u, s, and a may be determined according to base station (or cell) information.

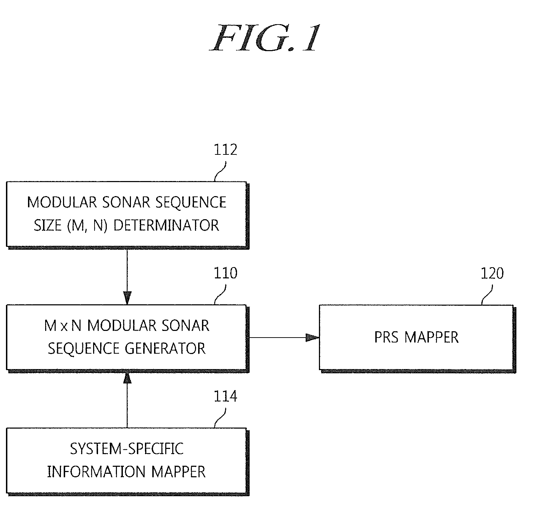

The above steps may be implemented by the apparatus illustrated in FIG. 1. The apparatus for forming the pattern of the PRS by using the modular sonar sequence largely includes an M × N modular sonar sequence generator 110 and a PRS mapper 120. The M × N modular sonar sequence generator 110 generates the modular sonar sequence and sizes M and N of the generated modular sonar sequence are determined through a modular sonar sequence size (M, N) determinator 112. Each modular sonar sequence generated through the M × N modular sonar sequence generator 110 is specifically determined for each base station (or cell) according to different parameter values determined by a system-specific information (cell-specific information) mapper 114.

A detailed operation for each apparatus is described below. The modular sonar sequence size (M, N) determinator 112 performs a function corresponding to step a in the method of generating the pattern of the PRS by using the modular sonar sequence according to the aspect of the embodiment of the present invention. That is, numbers of rows and columns available for position reference signals in a two dimensional single subframe structure having a frequency axis and a time axis for each subframe are calculated, and M and N are determined from combinations capable of using as many available rows and columns as possible from Ms and Ns combinable in table 1. The M × N modular sonar sequence generator 110 first generates M × N modular sonar sequence f(i), $1 \leq i \leq N$ (or $0 \leq i \leq N-1$) according to the construction method illustrated in table 1 based on the sizes of M and N determined through the modular sonar sequence size (M, N) determinator 112. Subsequently, the system-specific information mapper 114 receives different parameter values of a, u, and s determined as a function according to a base station (or cell), a relay node, a UE (or MS) or other specific information (a subframe number, a CP (Cyclic Prefix) size, etc.), and then generates the M × N modular sonar sequence represented as different specific patterns for each system (particularly, for each base station (or cell)) (cell-specific pattern), which corresponds to g(i) that is g(i)=uf(i)+si+a (mod m), $1 \leq i \leq N$ (or $0 \leq i \leq N-1$). A PRS mapper 120 maps a PRS to a row and a column available for the PRS in one subframe structure constructing a two-dimensional structure including a time axis (symbol in an OFDM structure) and a frequency axis (subcarrier in an OFDM structure) according the M × N modular sonar sequence g(i), $1 \leq i \leq N$ (or $0 \leq i \leq N-1$) generated through the M × N modular sonar sequence generator 110. That is, if an ith sequence value of the generated M × N modular sonar sequence is g(i)=j, the ith sequence value of the PRS for the subframe is mapped to a position where an ith available column (symbol axis) and a g(i)th available row (subcarrier axis) intersect and a position where a g(i)th available column (symbol axis) and an ith available row (subcarrier axis) intersect.

The method of generating the pattern of the PRS according to the present invention can generate a flexible pattern size. That is, since the method can variously select M and N in generating the M × N sequence, the method can flexibly apply pattern sizes.

The modular sonar sequence may be applied to various cases due to various cases of parameters of M and N.

For example, an MBSFN (Multicast Broadcast Single Frequency Network) subframe has a no-transmission region of 12 subcarriers × 10 symbols excluding a control region. Applicable values of M and N, an available frequency (subcarrier) and a time (symbol) size may be generated in consideration of a size of the two-dimensional no-transmission region for the subframe for the positioning and a case where parameters of M and N are available as illustrated in table 1. For example, in the MBSFN subframe, a size M × N is determined as 11(subcarriers) x 10 (symbols) through "Exponential Welch" method and 10 (symbols) × 11 (subcarriers), and the modular sonar sequence may be generated through the sizes.

When 11 (subcarriers) × 10 (symbols) is selected as the size M × N through "Exponential Welch" method of table 1, modulo M has a value of "11" and a length N has a value of "10". That is, M=11 is used for 11 available frequency horizontal axes among a total of 12 frequencies (subcarriers) of the horizontal axis in an MBSFN subframe of a two-dimensional time/frequency pattern. N=10 is used for 10 available time (symbol) vertical axes among a total of 10 times (symbols) of the vertical axis in the MBSFN subframe.

The M × N modular sonar sequence may be extended to very various two-dimensional sequence patterns discriminated by g(i)=uf(i)+si+a (mod m).

At this time, the determined M x N modular sonar sequence may be extended to the M × M × ($\Phi_c$(M) number of distinct PRS patterns through g(i)=uf(i)+si+a (mod m).

Here, $\Phi_c$(M) is defined as equation 5 below.

$$\Phi_c(M)=n(u=\{i \mid 1 \leq i < M,\ gcd(i,M)=1\}) \quad\text{.............................................. (5)}$$

In equation 5, gcd is the greatest common divisor.

Each of patterns included in the determined g(i), 1≤i≤N (or 0≤i≤N-1) has "minimum ambiguity". That is, although the original PRS pattern is cyclic-shifted (or is time or/and frequency delayed in an aspect of the system) in a time axis or/and a frequency axis, the maximum number of overlapped PRS symbols (or PRS sequence symbols, PRS sequence elements, or resource elements from an aspect of an OFDM-based resource allocation structure) is "1 " ( "0" or "1" ), and a larger number of PRS patterns or a PRS pattern having a higher reuse factor may be additionally generated.

The method of forming the PRS pattern by using the modular sonar sequence according to another aspect (second aspect) of the embodiment of the present invention will now be described.

a. In consideration of a larger value between the number of available rows and the number of columns for positioning reference signals in a two dimensional single subframe structure having a frequency axis (a symbol axis in an OFDM structure) and a time (a subcarrier axis in an OFDM structure) axis for each subframe (e.g. an MBSFN subframe, a normal subframe with a normal CP, and a normal subframe with an extended CP), the value is determined as M.

b-1. Based on the selected M, the M × N modular sonar sequence is generated by the construction method illustrated in table 1. At this time, when M=N from the M × N sequence, that is, a modular sonar sequence of N × N corresponds to an N × N modular sonar sequence and an N × N modular (or perfect) costas array.

b-2. When it is determined that a larger value is M and a smaller value is (N-N') betweem the number of available rows and the number of available columns for the PRS in the subframe structure, an M × (N-N') modular sonar sequence is generated by truncating an end of the M × N modular sonar sequence by N' where N is a length generated through b-1.

c/d. It is the same as step c/d according to the previous aspect of the embodiment of the present invention. However, in the previous aspect, the M × N modular sonar sequence is used, but in this aspect, the M × (N-N') modular sonar sequence is used. At this time, there are two methods of generating a specific modular sonar sequence (particularly, a base station (cell)-specific modular sonar sequence) for each system from the M × N modular sonar sequence. In a first method, the M × N modular sonar sequence is generated, the generated M × N modular sonar sequence is converted according to system-specific information, and then N' is truncated from the converted M × N modular sonar sequence, so that the M × (N-N') modular sonar sequence is generated. In a second method, the M × N modular sonar sequence is generated, and N' is truncated from the generated M × N modular sonar sequence, so that the M × (N-N') modular sonar sequence is generated. Then, the generated M × (N-N') modular sonar sequence is converted to a system-specific M × M × (N-N') modular sonar sequence according to system-specific information.

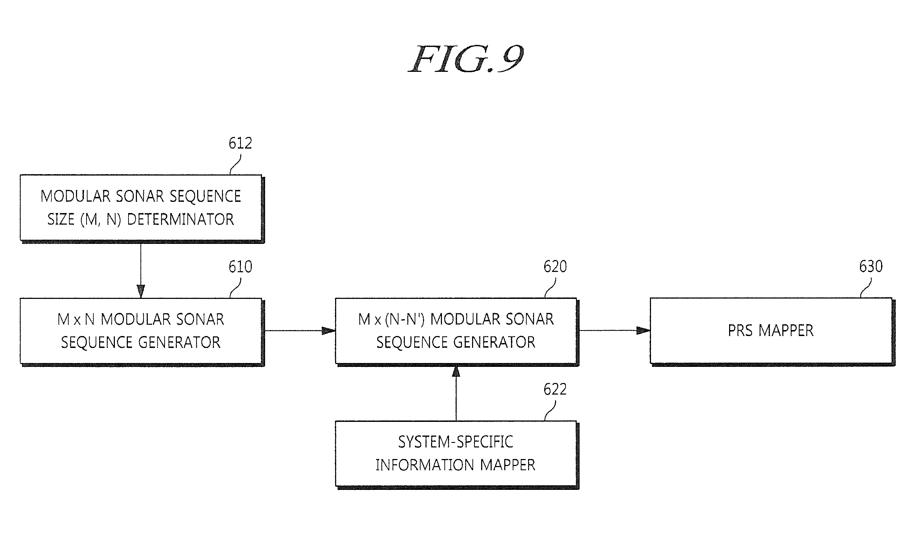

The method according to another aspect (second aspect) of the embodiment of the present invention may be implemented by an apparatus of FIG. 9. According to the present invention, another apparatus for generating the pattern of the PRS by using the modular sonar sequence largely includes an M × N modular sonar sequence generator 610, an M × (N-N') modular sonar sequence generator 620, and a PRS mapper 630. The M × N modular sonar sequence generator 610 generates the modular sonar sequence and sizes M and N of the generated modular sonar sequence are determined through a modular sonar sequence size (M, N) determinator 612. The M × (N-N') modular sonar sequence generator 620 generates the M × (N-N') modular sonar sequence by truncating an end of the generated M × N modular sonar sequence by N'. At this time, the M × N modular sonar sequence is specifically determined for each base station (cell) (cell-specific) according to different parameter values determined according to a system-specific information (cell-specific information) mapper 622, and then an end of the converted M × N modular sonar sequence is truncated by N', so that the M × (N-N') modular sonar sequence may be generated, or the end of the converted M × N modular sonar sequence is first truncated by N' and then the M × (N-N') modular sonar sequence is specifically determined for each base station (cell) (cell-specific) according to different parameter values.

A detailed operation for each apparatus is described below. The modular sonar sequence size (M, N) determinator 612 calculates a larger value of the number of available rows and the number of available columns for the PRS in one subframe structure, and then determines the larger value as M. Based on selected value of M, the M × N modular sonar sequence generator 610 generates the M × N modular sonar sequence through the construction method in table 1. When it is determined that a larger value is M and a smaller value is (N-N') among the number of available rows and the number of available columns for the PRS in the subframe structure, the M × (N-N') modular sonar sequence generator 620 generates the M × (N-N') modular sonar sequence by truncating an end of the M × N modular sonar sequence generated by the M × N modular sonar sequence generator 610 by N' where N is a length of the modular sonar sequence. At this time, as described above, the M × N modular sonar sequence is specifically determined for each base station (cell) (cell-specific) according to different parameter values determined according to the system-specific information (cell-specific information) mapper 622, and then an end of the M × N modular sonar sequence is truncated by N', so that the M × (N-N') modular sonar sequence may be generated, or the end of the converted M × N modular sonar sequence is first truncated by N' and then the M × (N-N') modular sonar sequence is specifically determined for each base station (cell) (cell-specific) according to different parameter values. At this time, the system-specific information maaper 622 receives different parameter values of a, u, and s determined as a function according to a base station (or cell), a relay node, a UE (or MS) or other specific information (a subframe number, a CP (Cyclic Prefix) size, etc.), and then generates the modular sonar sequence represented as different specific patterns for each system, particularly, for each base station (cell-specific patterns), which corresponds to g(i) that is g(i)=uf(i)+si+a (mod m), 1≤i≤N (or 0≤i≤N-1). The PRS mapper 620 maps a PRS to a row and a column available for the PRS in one subframe structure constructing a two-dimensional structure including a time axis (symbol in an OFDM structure) and a frequency axis (subcarrier in an OFDM structure) according the M × (N-N') modular sonar sequence g(i), 1≤i≤N-N' (or 0≤i≤(N-N')-1) generated through the M × (N-N') modular sonar sequence generator 620. That is, if an ith sequence value of the generated M × (N-N') modular sonar sequence is g(i)=j, the ith sequence value of the PRS for the subframe is mapped to a position where an ith available column (symbol axis) and a g(i)th available row (subcarrier axis) intersect and a position where a g(i)th available column (symbol axis) and an ith available row (subcarrier axis) intersect.

In the method (or apparatus) for forming the pattern of the PRS by using the M × N modular sonar sequence according to the aspect (first aspect) of the embodiment of the present invention, the M × N modular sonar sequence may be extended to the M × M × Φ $_c$(M) number of different RPS patterns by g(i)=uf(i)+si+a (mod m). At this time, a, u, and s are determined according to system information, particularly, base station (or cell) information, so that different patterns specific for each base station (cell) (cell-specific patterns) may be generated. At this time, when all of PRS patterns do not have to be used since the number of M × M × Φ$_c$(M) PRS patterns according to an aspect of the present invention is much more than the number of specific-information pieces, which should be discriminated, the method (or apparatus) according to the aspect of the present invention may be changed to the following method (or apparatus).

A first method (or apparatus) determines a value of "freq_shift_value, and a value of "time_shift_value" to be cyclic-shifted in a frequency axis and a time axis according to system-specific information, particularly, base station (or cell) information, and then cyclic-shifts the generated M × N modular sonar sequence f(i), 1≤i≤N (or 0≤i≤N-1) by the values in a frequency axis and a time axis. At this time, the number of values, which can be cyclic-shifted in a frequency axis and a time axis, is M and N, respectively, so that the M × N number of different system-specific (particularly, base station (cell)-specific) PRS patterns may be generated. That is, for example, when the Cell_ID_Group number of base station (cell)-specific information pieces is to be discriminated, a quotient and a remainder generated by dividing Cell_ID_Group by M (or N) are obtained, and the quotient and the remainder are determined as the value of "freq_shift_value, and the value of "time_shift_value" to be cyclic-shifted in a frequency axis and a time axis, respectively. For example, when 12×12 modular sonar sequence is used, the maximum number of distinct base station (cell)-specific information pieces is 144. At this time, when Cell_ID_Group=T≤144 and 0≤t≤T-1, it is determined that a quotient is "freq_shift_value(=(t-(t mod 12))/12=⌊t/12⌋)" and a remainder is "time_shift_value(=t mod 12)" by dividing T by 12. In contrast, when it is determined that a quotient is "time_shift_value(=t mod 12)" and a remainder is "freq_shift_value(=(t-(t mod 12))/12=⌊t/12⌋)" , a cyclic-shift is performed in a frequency axis by "freq_shift_value" and in a time axis by "time_shift_value" . That is represented as an equation below. When $f_0$(i), $0 \leq i < N$ (f(0)=f(N)) corresponds to the M × N modular sonar sequence generated in advance and an ith (0≤t<T) M × N modular sonar sequence to be converted through a frequency/time axis cyclic-shift is $f_t$(i), 0≤i<N, $f_t$(i), 0≤i<N may be represented as equation 6 below.

$$f_t(i) = (f_0((i + \lfloor t/M \rfloor) \bmod N) + (t \bmod M)) \bmod M, \ 0 \leq i < N \quad \text{..................(6)}$$

A second method (or apparatus) constructs PRS patterns only with patterns, which are not overlapped at all, among the M × M × Φ $_c$(M) number of patterns by the M × N modular sonar sequence, and generates specific PRS patterns for each system, particularly for each base station (cell) through a 1:1 correspondence table between the patterns and system-specific (particularly base station (cell)-specific) information. For example, when the M × M × Φ $_c$ (M) number of PRS patterns is generated, some of the patterns are not overlapped at all (0 overlapped patterns) and one pattern of the remaining patterns is overlapped (1 overlapped pattern). When the number of not overlapped patterns is "X", a 1:1 correspondence table between the maximum "X" number of patterns and the "X" number of base station numbers (cell_ID) is generated and the maximum "X" number of base station (cell)-specific PRS patterns may be generated through the 1:1 correspondence table.

Two changes of the step of generating different system-specific (particularly base station (cell)-specific) PRS patterns in the method (or apparatus) for forming the pattern of the PRS by using the M × N modular sonar sequence according to the aspect of the embodiment of the present invention may be identically applied to the method (or apparatus) for forming the PRS pattern by using the M×(N-N') modular sonar sequence in the same manner according to another aspect of the present invention.

The method of forming the pattern of the PRS by using the modular sonar sequence according to still another aspect (third aspect) of the embodiment of the present invention first calculates the number of available time (symbol) axes (the number is determined as M or N), and a maximum size of M × N modular sonar sequence, which may be combined from table 1, may be generated based on the number of available time (symbol) axes. For example, in a MBSFN subframe, the number of available time (symbol) axes is 10 and thus it is possible to generate the $11 \times 10$ modular sonar sequence.

Accordingly, the maximum number of available frequency (subcarrier) axes may be obtained. In the MBSFN subframe, the number is 11. The number of 11 is considered as the total number of frequency (subcarrier) axes and mapped as a period. That is, when the PRS pattern is repeated every 12 subcarriers on a frequency axis in the aspect and another aspect of embodiments of the present invention (specifically, when 11 subcarriers are used on a 12-subcarrier period), the PRS pattern is repeated every 11 subcarriers in still another aspect (third aspect) of the present invention. That is, 11 subcarriers are used on a 11-subcarrier period.

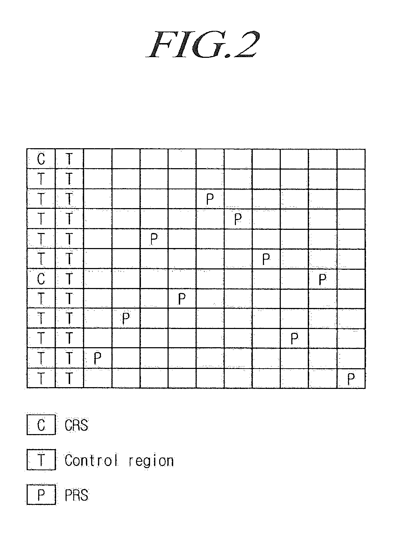

Hereinafter, exemplary embodiments of forming the PRS pattern by using the $M \times N$ modular sonar sequence according to an aspect of an embodiment of the present invention are described in detail with reference to FIGs. 2 to 8.

FIGs. 2 to 4 illustrate embodiments in an MBSFN subframe structure of an LTE system.

Referring to FIG. 2, when available columns correspond to 10 symbols among 10 symbol axes as a time (or a symbol or column axis) and available rows correspond to 11 subcarriers among 12 subcarrier axes as a frequency (or a subcarrier or row axis), the $11 \times 10$ modular sonar sequence is generated through "Exponential Welch" method of table 1.

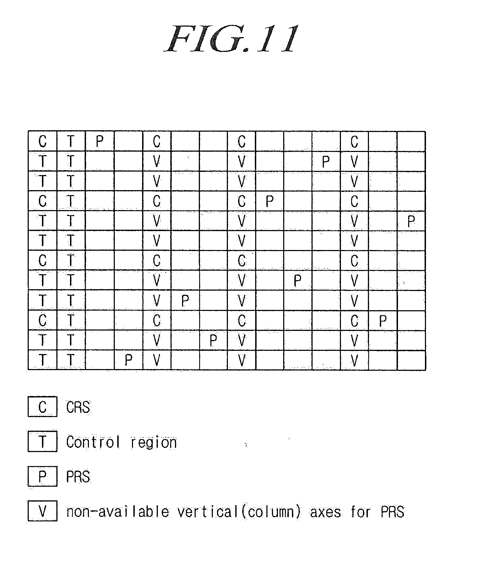

The sequence generated through "Exponential Welch" method corresponds to {2, 4, 8, 5, 10, 9, 7, 3, 6, 1}, and is mapped in the manner of FIG. 2. (In FIG. 2, a first PRS pattern is formed in a position where an available first row (symbol axis) and a second subcarrier axis from the bottom corresponding to a second subcarrier axis intersect, on an assumption that the bottom subcarrier axis is a first subcarrier axis in a subframe structure as shown in FIG. 2. However, when it is assumed that the bottom subcarrier axis is a zeroth subcarrier axis, the first PRS pattern is formed in a position where the available first row (symbol axis) and a third subcarrier axis from the bottom corresponding to the second subcarrier axis intersect. In this case, total RPS patterns are mapped such that the PRS patterns are upward cyclic-shifted by 1 in a subcarrier (frequency) axis from the signal patterns shown in FIG. 2.) In FIG. 2, 11 subcarrier axes excluding a twelfth subcarrier axis are used as available axes and certain 11 rows among 12 rows may be selected as available rows.

Different PRS sequence patterns are generated by g(i)=uf(i)+si+a, and then inherent PRS patterns for each system-specific information (particularly base station (cell)-specific information) may be generated. Further, the PRS patterns may be generated through a simple cyclic shift in a time/frequency axis.

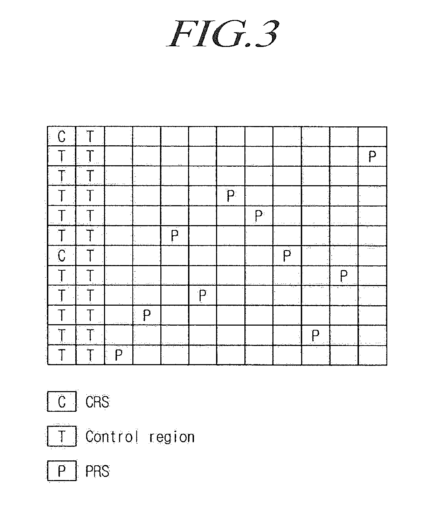

That is, when the sequence {2, 4, 8, 5, 10, 9, 7, 3, 6, 1} corresponds to f(i), 1≤i≤10 as a example, the sequence {1, 3, 7, 4, 9, 8, 6, 2, 5, 11} corresponds to a case where u=1, s=0, a=10(=-1 mod 11) from g(i)=uf(i)+si+a and may be mapped in a manner of FIG. 3.

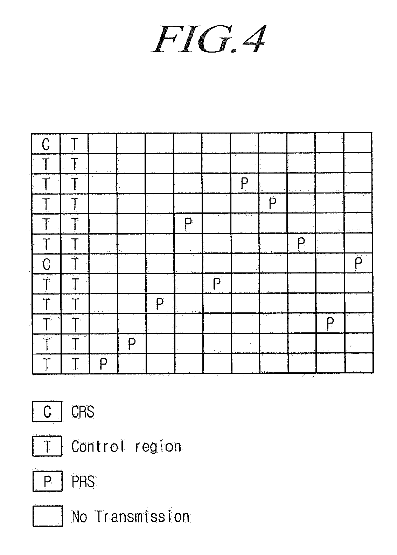

As another example, the sequence {1, 2, 4, 8, 5, 10, 9, 7, 3, 6} corresponds to a case where the sequence {2, 4, 8, 5, 10, 9, 7, 3, 6, 1} is cyclic-shifted by 1 in a time axis, and may be mapped in a manner of FIG. 4.

In the $1 \times 10$ modular sonar sequence, the generation of the $11 \times 11 \times 10=1210$ number of inherent patterns may be expected. At this time, when 1210 patterns are not required since the number 1210 is too much, $11 \times 10=110$ different PRS patterns may be generated only through a cyclic-shift of the generated patterns in a frequency axis and a time axis according to system-specific information. Further, by selecting only patterns, which are not overlapped at all, among the patterns, a 1:1 correspondence table between the patterns and system-specific (particularly base station (cell)-specific) information is generated and specific-PRS patterns for each system (particularly for each base station (cell)) may be generated through the 1: 1 correspondence table.

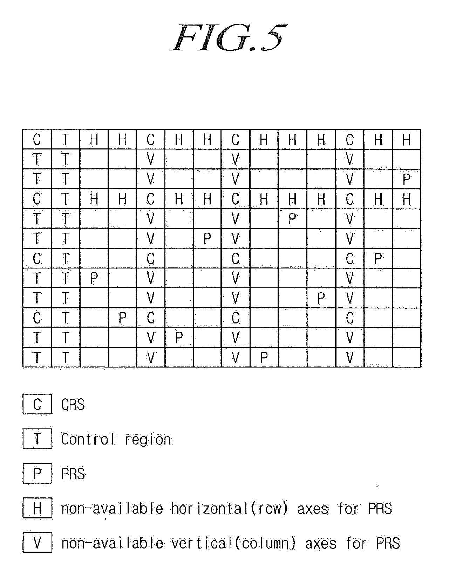

FIG. 5 illustrates embodiments in a normal subframe structure having a normal CP (Cyclic Prefix) of an LTE system.

Referring to FIG. 5, in the normal subframe having the normal CP, a no-transmission region except a control region corresponds to 12 (subcarriers) $\times$ 12 (symbols). When an additional 3 time vertical (or column) axes for CRS are considered as non-available vertical (or column) axes, 10 (subcarriers) $\times$ 9 (symbols) by the "Lempel" method or the "Colomb" method of table 1 may be an embodiment of the present invention. The subframe structure of FIG. 5 is an example of a 10 (subcarriers) $\times$ 9 (symbols) structure by the "Lempel" method. A $10 \times 9$ modular sonar sequence {5, 3, 2, 7, 1, 8, 4, 6, 9} by the "Lempel" method may be mapped as shown in FIG. 5. At this time, distinct patterns having 400 "minimum ambiguity" which is obtained by $10 \times 10 \times 4$ may be generated. Available columns correspond to 9 symbols among 12 symbol axes as a time (or a symbol or column axis) and available rows correspond to 10 subcarriers among 12 subcarrier axes as a frequency (or a subcarrier or row axis), and the $10 \times 9$ modular sonar sequence is generated.

At this time, the pattern is generated by selecting only certain 10 subcarrier axes among total 12 subcarrier axes. In embodiments of FIG. 5, 2 frequency horizontal axes from the top among 4 frequency horizontal axes including CRS are selected as non-available frequency horizontal (or row) axes.

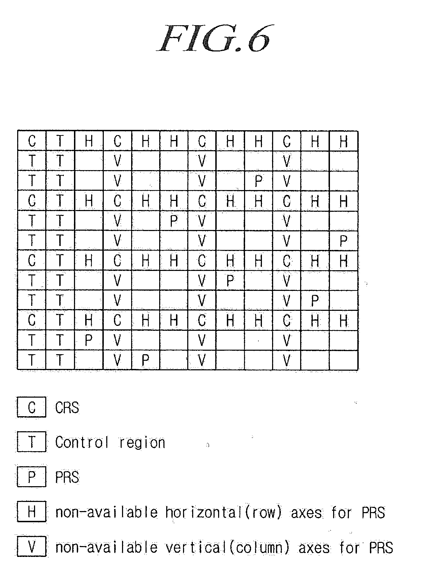

FIG. 6 illustrates embodiments in a normal subframe structure having an extended CP of an LTE system.

Referring to FIG. 6, in the normal subframe structure having an extended CP, a no-transmission region except a control region corresponds to 12 (subcarriers) $\times$ 10 (symbols). When an additional 3 time vertical (or column) axes for CRS are considered as non-available vertical (or column) axes, 8 (subcarriers) $\times$ 7 (symbols) by the "Lempel" method or the "Colomb" method or 7 (subcarriers) $\times$ 8 (symbols) by the "Quadratic" method of table 1 may be embodiments of the present invention. The subframe structure of FIG. 6 is an example of an 8 (subcarriers) $\times$ 7 (symbols) structure by the "Lempel" method. An 8 $\times$ 7 modular sonar sequence {2, 1, 6, 4, 7, 3, 5} by the "Lempel" method may be mapped as shown in FIG. 6. At this time, distinct patterns having 256 "minimum ambiguity" which is obtained by 8 $\times$ 8 $\times$ 4 may be generated. Available columns correspond to 7 symbol axes among 10 symbol axes as a time (or a symbol or column axis) and available rows correspond to 8 subcarrier axes among 12 subcarrier axes as a frequency (or a subcarrier or row axis), and the 8 $\times$ 7 (or 7 $\times$ 8) modular sonar sequence is generated.

At this time, the pattern is generated by selecting only a certain 8 subcarrier axes among total 12 subcarrier axes. In embodiments of FIG. 6, 4 frequency horizontal axes including CRS are selected as non-available frequency horizontal (or row) axes.

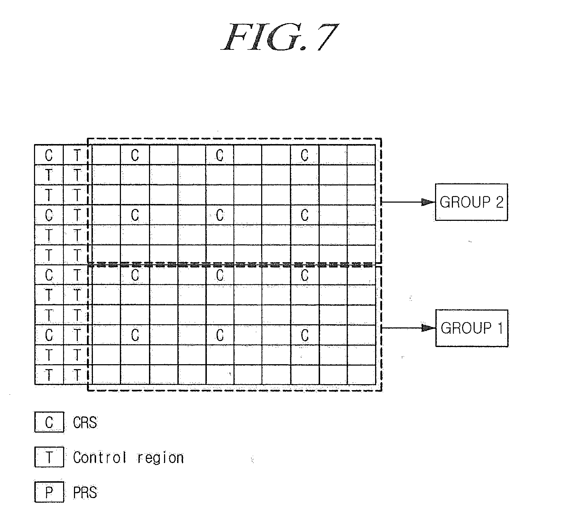

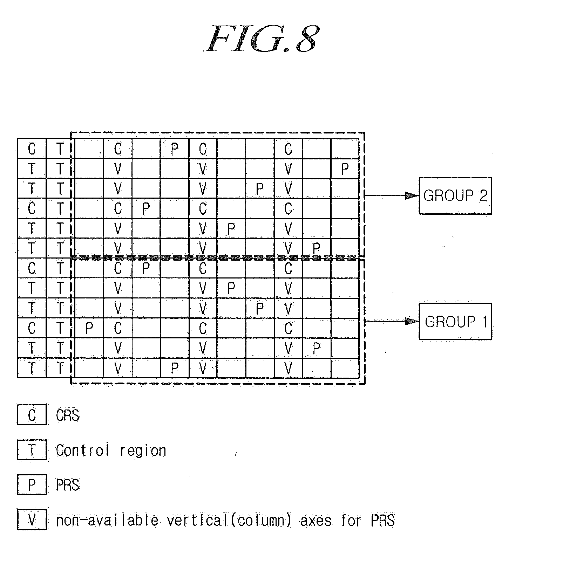

FIGs. 7 and 8 illustrate another embodiment in the normal subframe structure having the extended CP of an LTE system.

Referring to FIG. 7, available columns correspond to 7 symbol axes among 10 symbol axes as a time (or a symbol or column axis) and available rows correspond to 6 $\times$ 2=12 subcarrier axes among 12 subcarrier axes as a frequency (or a subcarrier or row axis), and they may be constructed by two 7 $\times$ 6 modular sonar sequences.

Through the two 7 $\times$ 6 modular sonar sequences, 12 subcarrier axes are divided into two groups each having 6 subcarriers, and each sequence is mapped to each group. As shown in the example of the structure of FIG. 7, the first 6 subcarrier axes may be a first group and the rest 6 subcarrier axes may be a second group or even number (or odd number) subcarrier axes may be a first group and the rest of odd number (or even number) subcarrier axes may be a second group.

Referring to FIG. 8, the pattern of the PRS in the normal subframe structure having the extended CP of an LTE system includes two 7 (symbols) $\times$ 6 (subcarriers) modular sonar sequences. At this time, a 7 $\times$ 6 sequence {3, 6, 1, 5, 4, 2} by the "Lempel" method and a 7 $\times$ 6 sequence {6, 4, 2, 5, 7, 3} by the "Colomb" method are mapped as the PRS pattern of an embodiment of the FIG. 8.

At this time, a method of mapping the 7 (symbols) $\times$ 6 (subcarriers) modular sonar sequence in FIG. 8 is different from a general method of mapping M (subcarriers) $\times$ N (symbols). In a M (subcarriers) $\times$ N (symbols) modular sonar sequence g(i), $1 \leq i \leq N$ (or $0 \leq i \leq$ N-1), when an ith sequence value of the M (subcarriers) $\times$ N (symbols) modular sonar sequence is g(i)=j, the ith sequence value of the PRS for the subframe is mapped to a position where an ith available column (symbol axis) and a g(i)th available row (subcarrier axis) intersect. However, in a M (symbols) xN (subcarriers) modular sonar sequence g(i), $1 \leq i \leq N$ (or $0 \leq i \leq$ N-1) like 7 (symbols) $\times$ 8 (subcarriers) in FIG. 8, the ith sequence value of the PRS for the subframe is mapped to a position a position where a g(i)th available column (symbol axis) and an ith available row (subcarrier axis) intersect.

Hereinafter, exemplary embodiments for forming the pattern of the PRS by using the M $\times$ (N-N') modular sonar sequence according to another aspect of an embodiment of the present invention are described in detail with reference to FIGs. 7 and 8.

As described above, when the M $\times$ N modular sonar sequence is generated, M is considered as one largest value among available frequency axes and time axes, and the PRS pattern may be generated. Here, referring to that considered available frequency axes correspond to 12 subcarriers and available time axes correspond to 10, 9, or 7 symbols in one subframe structure, M is determined as 12 and a 12 $\times$ N modular sonar may be generated through a value of M. At this time, available values of N from table 1 are 12 by the "Logarithmic Welch" method, 11 by the "Lempel" method or "Golomb" method, and 13 by the "Shift sequence" method. That is, an end of the sequence having a length of 12 (or 11, 13) may be truncated by N' from a 12 $\times$ 12 (or 12 $\times$ 11, 12 $\times$ 13) modular sonar sequence having the generated modular value of 12 and the length of 12 (or 11, 13). Finally, the M $\times$ (N-N') modular sonar sequence is generated. For example, in an MBSFN subframe which can have a maximum of 12 available frequency (subcarrier) axes and 10 available time (symbol) axes, an end of the sequence having a length of 12 (or 11, 13) is truncated by 2 (or 1, 3). Finally, a 12 (frequency axes) $\times$ 10 (time axes) modular sonar sequence is generated. In a normal subframe having the normal CP, an end of the sequence having a length of 12 (or 11, 13) is truncated by 3 (or 2, 4) by using the same method. Finally, a 12 (frequency axes) $\times$ 9 (time axes) modular sonar sequence is generated. In a normal subframe having the extended CP, a 12 (frequency axes) $\times$ 7 (time axes) modular sonar sequence is generated. Although an end of a sequence length is truncated, the performance is nearly the same since the discemable "distinct modular differences property" is almost maintained. However, there is an advantage in that a maximum number of available frequency axes (12 frequency axes in the above example) may be fully used.

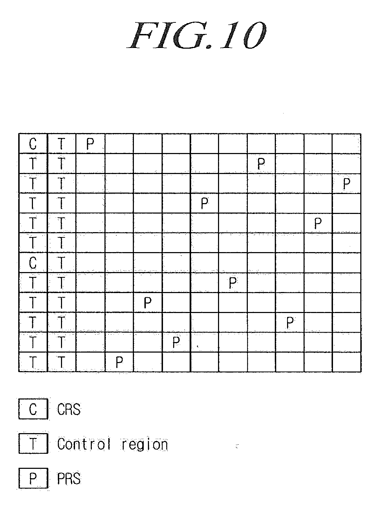

For example, when the 12 $\times$ 12 modular sonar sequence is generated by using the "Logarithmic Welch" method, a sequence {12(=0), 1, 4, 2, 9, 5, 11, 3, 8, 10, 7, 6} is generated. (In FIG. 10, a first PRS pattern is formed in a position where an available first row (symbol axis) and a twelfth subcarrier axis from the bottom corresponding to a twelfth(=0th) subcarrier axis intersect, on an assumption that the bottom subcarrier axis is a first subcarrier axis in a subframe structure as shown in FIG. 10. However, when it is assumed that the bottom subcarrier axis is 0th subcarrier axis, the first PRS pattern is formed in a position where the available first row (symbol axis) and a 0th subcarrier axis from the bottom corresponding to the twelfth(=0th) subcarrier axis intersect. In this case, total RPS patterns are mapped such that the PRS patterns are upward cyclic-shifted by 1 in a subcarrier (frequency) axis from the signal patterns shown in FIG. 2.)

FIG. 10 illustrates embodiments in an MBSFN (Multicast Broadcast Single Frequency Network) subframe structure of an LTE system.

Referring to FIG. 10, by truncating the last 2 sequences, a 12 × 10 modular sonar sequence {12(=0), 1, 4, 2, 9, 5, 11, 3, 8, 10} may be generated and mapped.

FIG. 11 illustrates embodiments in a normal subframe structure having the normal CP of an LTE system.

Referring to FIG. 11, by truncating the last 3 sequences, a 12 × 9 modular sonar sequence {12(=0), 1, 4, 2, 9, 5, 11, 3, 8} may be generated and mapped.

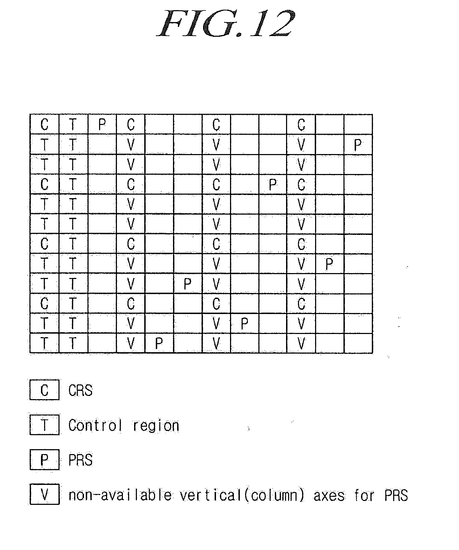

FIG. 12 illustrates embodiments in a normal subframe structure having the extended CP of a LTE system.

Referring to FIG. 12, by truncating the last 5 sequences, a 12 × 7 modular sonar sequence {12(=0), 1, 4, 2, 9, 5, 11} may be generated and mapped.

As another example, when a 12 × 11 modular sonar sequence is generated by "Lempel" method, a sequence {6, 10, 5, 7, 3, 1, 4, 9, 8, 2, 11} is generated.

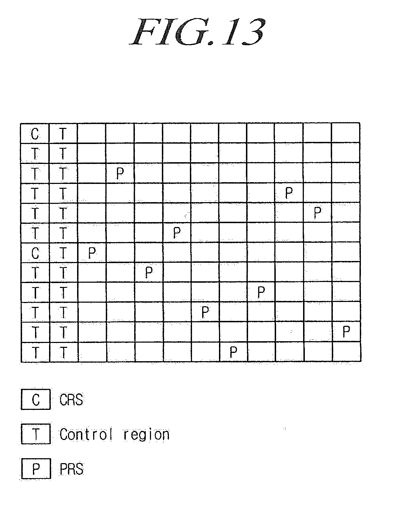

FIG. 13 illustrates embodiments in an MBSFN subframe structure of an LTE system.

Referring to FIG. 13, by truncating the last 1 sequence, a 12 × 10 modular sonar sequence {6, 10, 5, 7, 3, 1, 4, 9, 8, 2} is generated and mapped.

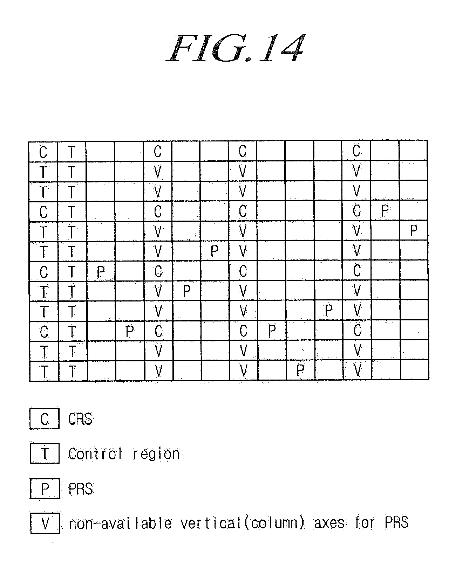

FIG. 14 illustrates embodiment in a normal subframe having the normal CP of an LTE system.

Referring to FIG. 14, by truncating the last 2 sequences, a 12 × 9 modular sonar sequence {6, 10, 5, 7, 3, 1, 4, 9, 8} is generated and mapped.

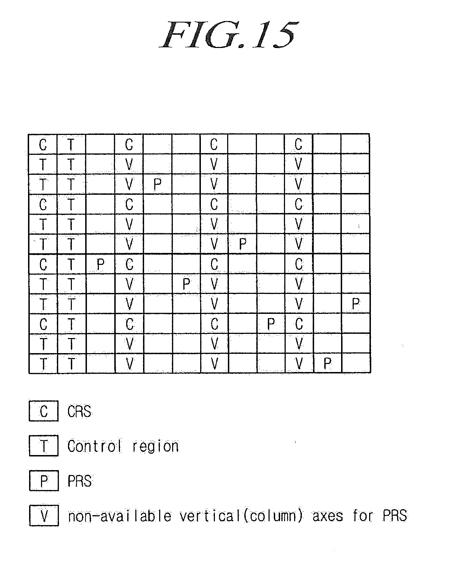

FIG. 15 illustrates embodiments in a normal subframe structure having the extended CP of an LTE system.

Referring to FIG. 15, by truncating the last 4 sequences, a 12 × 7 modular sonar sequence {6, 10, 5, 7, 3, 1, 4} is generated and mapped.

At this time, methods of generating different pattern of the sequences generated in the embodiments may use g(i)=uf(i)+si+a (mod m) as described above, use only cyclic-shifted patterns in a time/frequency axis from the generated patterns, or select only patterns corresponding to the 0 overlapped pattern among patterns generated through the two methods and then use the selected patterns.

Further, when the cyclic-shifted patterns in a time/frequency axis are used for the modular sonar sequence generated in the above embodiments, the patterns are cyclic-shifted in both time and frequency axes, or the patterns are fully cyclic-shifted in one axis of the time axis and the frequency axis but the patterns are partially cyclic-shifted in the other axis. In the latter case, as an example, the patterns are fully cyclic-shifted in the frequency axis but the patterns are cyclic-shifted only in one or two time axes, and then the PRS patterns may be generated.

First, when the 12 × 12 modular sonar sequence is generated by using the "Logarithmic Welch" method, the generated original M × N modular sonar sequence where M=12 and N=12 corresponds to $f_0 = \{f_0(0), f_0(1), f_0(2), f_0(3), f_0(4), f_0(5), f_0(6), f_0(7), f_0(8), f_0(9), f_0(10), f_0(11))$ ={12(=0), 1, 4, 2, 9, 5, 11, 3, 8, 10, 7, 6}. At this time, a method of generating 144 PRS sequences is as follows.

a. A M × N modular sonar sequence $f_0(i)$, $0 \le i \le N$ ($f(0)=f(N)$) is generated by the construction method in table 1. In the above example where M=12, $f_0 =(f_0(0),f_0(1),f_0(2),f_0(3),f_0(4),f_0(5),f_0(6),f_0(7),f_0(8),f_0(9),f_0(10),f_0(11)\}$={12(=0), 1,4,2,9,5,1 1,3,8,10,7,6} is generated.

b. A tth ($0 \le t < T$= M × N) M x N modular sonar sequence $f_t(i)$ ( $0 \le i < N$) is generated by equation 6. In the above example, T=144 and the 144 number of distinct 12 × 12 modular sonar sequences is generated. Equation 6 is defined as follows.

$$f_t(i) = \left( f_0\left( \left( i + \lfloor t/M \rfloor \right) \bmod N \right) + (t \bmod M) \right) \bmod M, \quad 0 \le i < N$$

..……………… (6)

In equation 6, $\lfloor t/M \rfloor$ is a quotient of t/M and used for a cyclic-shift in a time axis. (t mod M) is a remainder of t/M and used for a cyclic-shift in a frequency axis.

c. As illustrated in equation 7 below, a truncated M×(N-N' ) modular sonar sequence $f_t(i)=f_t(i)$ ($0 \le i < N-N'$) is generated. Of course, there may be a case where the truncation is not required, that is, N' has a value of "0" .

$$f_t'(i) = f_t(i) \text{ for } 0 \le i < N - N' \quad \text{............................................. (7)}$$

d. The PRS pattern is generated. In the PRS pattern in a two-dimensional structure including M×(N-N' ) frequency (subcarrier)/time (symbol) , a PRS pattern for an OTDOA positioning subframe is formed in a position where an ith available symbol axis and a $f_t(i)$th available subcarrier axis intersect for $0 \le i < N$-N' ($0$=$N$-$N'$ mod($N$-$N'$)) .

e. The PRS sequence is mapped to the PRS pattern of the generated OTDOA positioning subframe.

As described above, the patterns may be cyclic-shifted in both the time axis and the frequency axis, or the patterns are fully cyclic-shifted in one axis of the time axis and the frequency axis but the patterns are partially cyclic-shifted in the other axis. As an example where the patterns are generated by cyclic-shifting the patterns in all frequency axes and in two time axes, a case where the 12×12 modular sonar sequence is used without any change or used by truncating the sequence is described. At this time, a cyclic-shift is possible in 12 frequency axes and 2 time axes so that 24 patterns may be generated.

A method of generating 24 PRS sequences from the original M×N modular sonar sequence $f_0$ = {$f_0(0)$, $f_0(1)$, $f_0(2)$, $f_0(3)$, $f_0(4)$, $f_0(5)$, $f_0(6)$, $f_0(7)$, $f_0(8)$, $f_0(9)$, $f_0(10)$, $f_0(11)$} = {12(=0), 1, 4, 2, 9, 5, 11, 3, 8, 10, 7, 6} where M=12 and N=12 is as follows.

a. A modular sonar sequence $f_0(i)$, $0 \le i < N$ ($f(0)$= $f(N)$) is constructed by the construction method in table 1. In the above case where M=12, $f_0$ = {$f_0(0)$, $f_0(1)$, $f_0(2)$, $f_0(3)$, $f_0(4)$ ,$f_0(5)$, $f_0(6)$, $f_0(7)$, $f_0(8)$, $f_0(9)$, $f_0(10)$, $f_0(11)$}={12(=0),1, 4 ,2, 9, 5, 11, 3, 8, 10, 7, 6} is generated.

b. A tth ($0 \le t <$ T=2M) M × N modular sonar sequence $f_t(i)$($0 \le i < N$) is generated by equation 8 below. When M=12, T=24 and distinct 12 × 12 modular sonar sequences are generated. In equation 8 below, k has values from 1 to 11. For example, when k=1, 2 time axes used for a cyclic shift correspond to cyclic shifting the M×N modular sonar sequence in a time axis zero time and one time. When k=6, the 2 time axes used for the cyclic shift correspond to cyclic shifting the M × N modular sonar sequence in a time axis zero time and six times.

$$f_t(i) = (f_0((i + k \cdot \lfloor t / M \rfloor) \bmod N) + (t \bmod M)) \bmod M, \ 0 \le i < N \quad \text{........................... (8)}$$

In equation 8, $\lfloor t/M \rfloor$ is a quotient of t/M and used for a cyclic-shift in a time axis. (t mod M) is a remainder of t/M and used for a cyclic-shift in a frequency axis.

c. A truncated M×(N-N' ) modular sonar sequence $f_t'(i)$=$f_t(i)$ ($0 \le i <$N-N' ) is generated by equation 7. Of course, there may be a case where the truncation is not required, that is, N' has a value of "0" .

d. The PRS pattern is generated. In the PRS pattern in a two-dimensional structure including M × (N-N' ) frequency (subcarrier)/time (symbol) , a PRS pattern for an OTDOA positioning subframe is formed in a position where an ith available symbol axis and a $f_t'(i)$th available subcarrier axis intersect for $0 \le i < N$- $N'$($0$=$N$-$N'$ mod (N-N')).

e. The PRS sequence is mapped to the PRS pattern of the generated OTDOA positioning subframe.

A case where the PRS pattern is generated by cyclic-shifting the PRS pattern in all frequency axes and 1 time axis, or only all frequency axes is described as an example in which 12 × 12 modular sonar sequence is used without any change or is used after the truncation. At this time, the PRS pattern is generated by cyclic-shifting the PRS pattern in all frequency axes so that 12 patterns may be generated.

A method of generating 12 PRS sequences from the original M × N modular sonar sequence $f_0$ = {$f_0(0)$, $f_0(1)$, $f_0(2)$, $f_0(3)$, $f_0(4)$, $f_0(5)$, $f_0(6)$, $f_0(7)$, $f_0(8)$, $f_0(9)$,$f_0(10)$,$f_0(11)$) = {12(=0), 1, 4, 2, 9, 5, 11, 3, 8, 10, 7, 6} where M=12 and N=12 is as follows.

a. A modular sonar sequence $f_0(i)$, $0 \le i < N$ ($f(0)$= $f(N)$) is constructed by the construction method in table 1. In the above case where M=12, $f_0$ = {$f_0(0)$,$f_0(1)$, $f_0(2)$,$f_0(3)$, $f_0(4)$, $f_0(5)$, $f_0(6)$, $f_0(7)$, $f_0(8)$,$f_0(9)$, $f_0(10)$, $f_0(11)$}={12(=0), 1, 4, 2, 9, 5, 11, 3, 8, 10, 7, 6} is generated.

b. A tth ($0 \le t <$ T=M) M × N modular sonar sequence $f_t(i)$($0 \le i < N$) is generated by equation 9 below. When M=12, T=12 and the 12 total number of distinct 12 × 12 modular sonar sequences are generated.

$$f_t(i) = (f_0(i) + t) \bmod M, \ 0 \le i < N \quad \text{.........................…. (9)}$$

The rest c/d/e steps are identical to c/d/e steps of the method of generating the 144 PRS patterns or the 24 PRS patterns.

Further, as described above, both the time axis and the frequency axis may be fully cyclic-shifted, one axis of the time axis and the frequency axis may be fully cyclic-shifted, or a part of the time axis and/or a part of the frequency axis may be cyclic-shifted.

For example, 6 PRS sequences may be generated by cyclic-shifting only a half (M/2) of the frequency axis from the original M × N modular sonar sequence $f_0$ = {$f_0(0)$, $f_0(1)$, $f_0(2)$, $f_0(3)$, $f_0(4)$, $f_0(5)$, $f_0(6)$, $f_0(7)$, $f_0(8)$, $f_0(9)$, $f_0(10)$, $f_0(11)$}= {12(=0), 1, 4, 2, 9, 5, 11, 3, 8, 10, 7, 6} where M=12 and N=12. A method is identical to the method of generating the 12 PRS sequences, but there is only a difference in a range of t where 0≤t<T=M/2. Further, in step d, the PRS pattern for the OTDOA positioning subframe is formed in all positions where an ith available symbol axis and a (($f_t$'(i)+ $\lfloor M/2 \rfloor$) mod M)th available subcarrier axis intersect as well as all positions where an ith available symbol axis and a $f_t$(i)th available subcarrier axis intersect.

In the above examples, T is 144, 24, 12, and 6, respectively, and corresponds to the total number of system-specific information which should be discriminated. If system-specific information corresponds to a base station (cell) ID, that is, a PCI (Physical Cell Identify), T may be a value generated by multiplying all base station (cell) IDs by groups corresponding to T. That is represented as equation 10 below, and T corresponds to 144, 24, 12, and 6 in equation 10 like the above examples.

$$0 \leq t = N_{ID}^{cell} \bmod T < T$$

..................................... (10)

For example, when T=144, that is, when the total number of patterns is 144, equation 10 may be represented as $0 \leq t = N_{ID}^{cell} \bmod 144 < T$. Here, $N_{ID}^{cell}$ has a value of $0 \leq N_{ID}^{cell} < 504$ 504 and corresponds to a PCI (Physical Cell Identity).

In the above description, it has been discussed that the PRS pattern is generated by cyclic-shifting the modular sonar sequence in both the time axis and the frequency axis, fully in one axis of the time axis and the frequency axis, or partially in the time axis and/or the frequency axis. At this time, in general, an apparatus for generating the PRS pattern by using the modular sonar sequence has the same basic construction as that of the apparatus illustrated in FIG. 1 or 9, but only a part of functions of forming the PRS pattern through the aforementioned steps is different. Accordingly, a description for apparatuses for implementing the functions is replaced with the detailed description for the apparatus illustrated in FIG. 1 or 9.

In the embodiments, it has been described that the M × N modular sonar sequence is used for generating the PRS pattern, but the M × N modular sonar sequence according to the present invention may be used for other reference signals other than the PRS, for example, a particular signal inserted into a frequency domain grid for a frequency domain channel estimation at regular or irregular intervals, a reference signal which is a symbol, a reference symbol, or a pilot symbol. For example, reference signals in an uplink transmission include a DM-RS (DeModulation RS) and an SRS (Sounding RS). In a downlink transmission, the M × N modular sonar sequence may be used in a permissible range for generating patterns of a CRS (Cell-specific RS), an MBSFN RS, and a UE-specific RS as the reference signal, and a CSI-RS (CQI-RS) as the reference signal transmitted from a base station in order to enable a user device (terminal) to obtain Channel Spatial Information (CSI) of a central cell or neighbor cells. Of course, the M × N modular sonar sequence may be used for all reference signals currently defined or to be defined in the future, or all reference signals having a changed definition.

Further, the M × N modular sonar sequence may be used for forming patterns of all signals which a terminal or a base station determines to transmit and receive in a specific time and frequency band for a channel estimation, a position estimation, and a transmission/reception of information for control information or a scheduling required for a process of wireless communication between the terminal and the base station. At this time, when a particular signal or symbol is inserted into a two-dimensional domain grid of a time and a frequency at regular or irregular intervals, the signal pattern corresponds to a form in which the particular signal is inserted in a two-dimensional region of a time and a frequency.

In the embodiments, it has been described that the M × N modular sonar sequence may be used for forming the pattern of the reference signals including the PRS, but one or more sequences having the same characteristic as that of the aforementioned M × N modular sonar sequence may be used for generating the pattern of the reference signal including the PRS in the present invention. For example, as described in the example, the M × N modular sonar sequence where M=N has the same characteristic as that of the N × N modular (or perfect) costas array. In this case, the modular sonar sequence includes the modular castas array.

Meanwhile, In the embodiments, methods of generating 144, 24, 12, and 6 PRS patterns in one subframe has been described, but the methods are only illustrative. Further, various numbers of PRS patterns are generated according one subframe form and then the PRS patterns may be used for the positioning of the OTDOA manner.

In the embodiments, the method of generating the PRS patterns with different patterns, which are specific for each cell, by using the modular sonar sequence based on one subframe has been described. However, in one or more subframes of a radio frame including subframes, the particular signal specific for each cell, for example, PRS patterns may be generated by using the aforementioned modular sonar sequence.

Further, the particular signal specific for each cell, for example, PRS patterns may be generated by using the aforementioned modular sonar sequence in the particular number of subframes in every frame on a particular frame period in an aspect of the frame.

Hereinafter, frame periods, on which the particular signals specific for each cell, for example, PRS patterns are generated by using the aforementioned modular sonar sequence in the particular number of subframes and resource blocks of a corresponding frame, will be described.

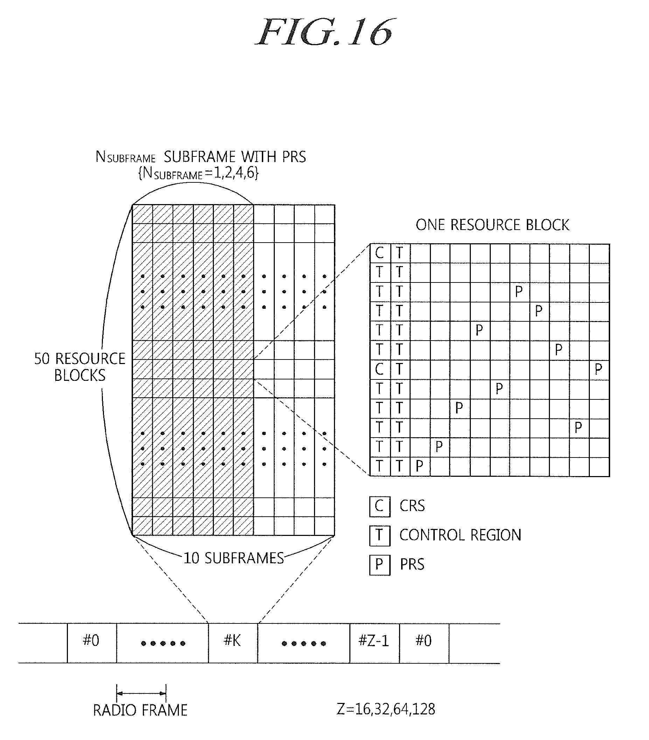

FIG. 16 illustrates structures of the frame in which the PRS pattern is formed in one or more subframes and the subframe according to still another embodiment of the present invention.

Referring to FIG. 16, a basic subframe structure may include one or more PRS subframes on a particular period, for example, a period of 16, 32, 64, or 128 for the OTDOA positioning. Only 0.1% to 1% of subframes among all subframes may be used for the OTDOA positioning in consideration of an overhead. For example, when a 32 radio frame period is selected, subframes for PRS are included on a 320 subframe (1 radio frame = 10 subframes) period and first 1 or 2 subframes may be used. When a 64 radio frame period is selected, subframes for the PRS are included on a 640 subframe period and first 4 or 6 subframes may be used.

At this time, the subframe may include an MBSFN (Multicast Broadcast Single Frequency Network) subframe, a normal subframe having a normal CP (Cyclic Prefix), or a normal subframe having an extended CP of a communication system, for example, an LTE system.

At this time, one constructed PRS subframe may use all BandWidths (BWs) in a frequency axis, but embodiments of the present invention are not limited thereto and may use a part of all BW.

That is, when the BW corresponds to 10 Mhz, there exist 50 resource blocks in the BW. The constructed PRS pattern corresponds to one RB in a frequency axis so that the one constructed PRS subframe may be used to generate PRS subframes in a frequency axis. In this case, the generated one PRS subframe pattern may be copied and then 50 PRS RBs having the same patterns may be constructed in a frequency axis, or PRS RBs having different patterns may be generated.

As described above, in a time axis, first 1, 2, 4, or 6 PRS subframes may be used among 10 subframes included in a single radio frame on a radio frame period of 16, 32, 64, or 128. At this time, the remaining subframes other than the PRS subframe may be constructed with existing subframes.

At this time, a maximum of 6 PRS subframes in a time axis may have the same pattern as that of the generated one subframe (time non-varying which means there is no change in a time axis), or may have a different pattern from that of the generated one subframe (time-varying which means there is a change in a time axis). That is, PRS subframes may be changed for each subframe number or may not be changed.

Further, a time of arrival for signal power may be measured in an OTDOA method by simultaneously considering repetitive patterns synthetically in order to obtain a time accumulation effect, and each time of arrival for signal power may be measured for each PRS subframe in order to discriminate more system-specific information.

For example, when 2 subframes are periodically used for the PRS subframe, if a time of arrival for signal power is measured in an OTDOA method by simultaneously considering all signals (in all particular time and frequency bands where REs corresponding to the pattern are located) corresponding to 2 subframe time/frequency patterns synthetically, a time accumulation effect is obtained so that errors generated in detecting a UE location may be reduced (performance may be improved). If a time of arrival for signal power in each PRS subframe is separately measured, square times of information may be distinct in comparison with a case where a single subframe is used.

In a time non-varying case, the existing PRS subframe pattern generated for each case may be constructed without any change in the $N_{subframe}$ number of subframes to be periodically used in a time axis in the same pattern. That is represented as table 2 below according to each case. At this time, a time of arrival for signal power is measured by simultaneously considering the repetitive $N_{subframe}$ number of subframe patterns synthetically so that a time accumulation effect for the $N_{subframe}$ number of subframes may be obtained.

1. Time non-varying case

: the $N_{subframe}$ number of accumulations ($N_{subframe}$ =1,2,4,6)

[Table 2]

| a) Case 1 : 144 Cell Groups, $N_{subframe}$ number accumulations | | |
|---|---|---|
| Subframe 0 | ... | Subframe N-1 |
| Case 1 | Case 1 | Case1 |
| b) Case 2 : 24 Cell Groups, $N_{subframe}$ number accumulations | | |
| Subframe 0 | ... | Subframe N-1 |
| Case2 | Case2 | Case2 |
| c) Case 3 : 12 Cell Groups, $N_{subframe}$ number accumulations | | |
| Subframe 0 | ⋯ | Subframe N-1 |
| Case3 | Case3 | Case3 |
| d) Case 4 : 6 Cell Groups, $N_{subframe}$ number accumulations | | |
| Subframe 0 | ⋯ | Subframe N-1 |
| Case4 | Case4 | Case4 |

In a time varying case, the existing PRS subframe pattern generated for each case may be constructed in the $N_{subframe}$ number of subframes to be periodically used in a time axis in different patterns for each subframe. In case 2 where 24 patterns exist, 24 patterns are cyclic-shifted in a frequency axis by 12 and are not cyclic-shifted or are cyclic-shifted by 1 in a time axis.

That is, in a first PRS subframe of case 2, 24 patterns are generated by a 12 cyclic-shifts in a frequency axis when a cyclic-shift in a time axis is 0 and 12 cyclic-shifts in a frequency axis when a cyclic-shift in a time axis is 1 (or 6). Accordingly, 10 cyclic-shifts in a time axis corresponding to cases where cyclic-shifts are 2-11 (or 1-5 and 7-11) are not used for forming the PRS patterns but may be used for the rest subframes.

For example, 24 patterns are generated by 12 cyclic-shifts in a frequency axis when cyclic-shifts in a time axis are 0 and 1 in a first PRS subframe, and 24 different patterns from the PRS patterns used in the first subframe may be generated by 12 cyclic-shifts in a frequency axis when cyclic-shifts in a time axis are 2 and 3 in a second PRS subframe. In a third PRS subframe, PRS patterns are generated when cyclic-shifts in a time axis are 4 and 5, and then the generated PRS patterns are used. In a fourth RPS subframe, PRS patterns are generated when cyclic-shifts in a time axis are 6 and 7, and then the generated PRS patterns are used. In a fifth RPS subframe, PRS patterns are generated when cyclic-shifts in a time axis are 8 and 9, and then the generated PRS patterns are used. In a sixth RPS subframe, PRS patterns are generated when cyclic-shifts in a time axis are 10 and 11, and then the generated PRS patterns are used.

Through another method, 24 patterns are generated by 12 cyclic-shifts in a frequency axis when cyclic-shifts in a time axis are 0 and 6 in a first PRS subframe in a first PRS subframe, and 24 different patterns from the PRS patterns used in the first subframe may be generated by 12 cyclic-shifts in a frequency axis when cyclic-shifts in a time axis are 1 and 7 in a second PRS subframe. In a third PRS subframe, PRS patterns are generated when cyclic-shifts in a time axis are 2 and 8, and then the generated PRS patterns are used. In a fourth RPS subframe, PRS patterns are generated when cyclic-shifts in a time axis are 3 and 9, and then the generated PRS patterns are used. In a fifth RPS subframe, PRS patterns are generated when cyclic-shifts in a time axis are 4 and 10, and then the generated PRS patterns are used. In a sixth RPS subframe, PRS patterns are generated when cyclic-shifts in a time axis are 5 and 11, and then the generated PRS patterns are used.

The above function is represented as an equation below.

2-1. Time-varying case 2

: $N_{subframe}$ accumulations ( $0 \le t = N_{ID}^{rcell} \bmod 2M < 2M$ and $t = N_{ID}^{rcell} \bmod 24$ where M=12),

A method of constructing different patterns for each subframe in the $N_{subframe}$ number ($N_{subframe=}$1, 2, 4, 6) of subframes to periodically use 24 generated PRS subframe patterns in a time axis from the original M × N modular sonar sequence $f_0(0), f_0(1), f_0(2), f_0(3), f_0(4), f_0(5), f_0(6), f_0(7), f_0(8), f_0(9), f_0(10), f_0(11)$}={11,0,3,2,9,4,10,2,7,9, 6, 5} or {0, 1, 4, 3, 10, 5, 11, 3, 8, 10, 7, 6} where M=12 and N=12 is as follows.

1) Case 2 (T=2M, $N_{subframe}$=1,2,4,6)

a) The original M × N modular sonar sequence $f_0(i)$, $0 \le i < N$ ($f(0)=f(N)$) is constructed by the construction method in table 1. In the example where M=12, $f_0$ = {$f_0(0)$, $f_0(1)$, $f(2)$, $f_0(3)$, $f_0(4)$, $f_0(5)$, $f_0(6)$, $f_0(7)$, $f_0(8), f_0(9)$, $f_0(10)$, $f_0$

(11)}= {0, 1, 4, 3, 10, 5, 11, 3, 8, 10, 7, 6} is generated.

b) In a $n_{subframe}$th ($0 \leq n_{subframe} = \lfloor n /2 \rfloor < N_{subframe}$) subframe, a tth ($0 \leq t < T = 2M$) M × N modular sonar sequence $f_{n_{subframe}, t}(i)$, $0 \leq i < N$ is generated.

When M=12, T=24 and 24 distinct 12 × 12 modular sonar sequences are generated. When $N_{subframe}$= 6, in a first PRS subframe, 24 patterns are generated by 12 cyclic-shifts in a frequency axis when a cyclic-shift in a time axis is 0 and 12 cyclic-shifts in a frequency axis when a cyclic-shift in a time axis is 6. In a second PRS subframe, 24 different patterns from the PRS patterns used in the first subframe may be formed, and the different patterns are generated by 12 cyclic-shifts in a frequency axis when cyclic-shifts are 1 and 7 in a time axis. In a third RPS subframe, 24 different PRS patterns are generated by 12 cyclic-shifts in a frequency axis when cyclic-shifts in a time axis are 2 and 8. In a fourth RPS subframe, 24 different PRS patterns are generated by 12 cyclic-shifts in a frequency axis when cyclic-shifts in a time axis are 3 and 9. In a fifth RPS subframe, 24 different PRS patterns are generated by 12 cyclic-shifts in a frequency axis when cyclic-shifts in a time axis are 4 and 10. In a sixth RPS subframe, 24 different PRS patterns are generated by 12 cyclic-shifts in a frequency axis when cyclic-shifts in a time axis are 5 and 11.

$$f_{n_{subframe},t}(i) = \left(f_0\left(\left(i + n_{subframe} + 6 \cdot \lfloor t / M \rfloor\right) \bmod N\right) + \left(t \bmod M\right)\right) \bmod M, \ 0 \leq i < N \ \dots (11)$$

In equation 6, $\lfloor t/M \rfloor$ is a quotient of t/M and used for a cyclic-shift in a time axis. (t mod M) is a remainder of t/M and used for a cyclic-shift in a frequency axis.

c) A truncated M × (N-N') modular sonar sequence $f_{n_{subframe},t}'(i)$, $0 \leq i < N - N'$ is generated by equation 12 below. Of course, there may be a case where the truncation is not required, that is, N' has a value of "0".

$$f_{n_{subframe},t}'(i) = f_{n_{subframe},t}(i) \text{ for } 0 \leq i < N - N' \ \dots\dots (12)$$

d) The PRS pattern is generated. In the PRS pattern in a two-dimensional structure including M × (N-N') frequency (subcarrier)/time (symbol), a PRS pattern for an OTDOA positioning subframe is formed in all positions where an ith available symbol axis and a $f_{n_{subframe},t}'(i)$th available subcarriers axis intersect for $0 \leq i < N-N-N'$ ($0 = N-N'$ mod $(N-N')$).

e) The PRS sequence is mapped to the PRS pattern of the generated OTDOA positioning subframe.

In a first PRS subframe of case 3, 12 patterns are generated by 12 cyclic-shifts in a frequency axis when a cyclic-shirt in a time axis is 0. Accordingly, the remaining 11 cyclic-shifts in a time axis corresponding to cases where cyclic-shifts are 1-11 in a time axis are not used for forming the PRS signals but may be used for the remaining subframes.

The above function is represented as equation below.

2-2. Time-varying case 3

: $N_{subframe}$ accumulations ( $0 \leq t = N_{ID}^{cell} \bmod M < M$ and $t = N_{ID}^{cell} \bmod 12$ where M=12),

A method of constructing different patterns for each subframe in the $N_{subframe}$ number ($N_{subframe=}$1, 2, 4, 6) of subframes to periodically use 12 PRS subframe patterns in a time axis from the original M × N modular sonar sequence $f_0 = \{f_0(0), f_0(1), f_0(2), f_0(3), f_0(4), f_0(5), f_0(6), f_0(7), f_0(8), f_0(9), f_0(10), f_0(11)\}=\{11, 0, 3, 2, 9, 4, 10, 2, 7, 9, 6, 5\}$ or {0, 1, 4, 3, 10, 5, 11, 3, 8, 10, 7, 6} where M=12 and N=12 is as follows.

1) Case 3 (T=2M, $N_{subframe}$=1,2,4,6)

a) The original M × N modular sonar sequence $f_0(i)$, $0 \leq i < N$ ($f(0)=f(N)$) is constructed by the construction method in table 1. In the example where M=12, $f_0=\{f_0(0), f_0(1), f_0(2), f_0(3), f_0(4), f_0(5), f_0(6), f_0(7), f_0(8), f_0(9), f_0(10), f_0(11)\}=$ {0, 1, 4, 3, 10, 5, 11, 3, 8, 10, 7, 6} is generated.

b) In an $n_{subframe}$th ($0 \leq n_{subframe} = \lfloor n_s /2 \rfloor < N_{subframe}$) subframe, a tth ($0 \leq t < T= M$) M × N modular sonar sequence $f_{n_{subframe},t}(i)$, $0 \leq i < N$ is generated by equation 13.

When M=12, T=24 and 12 distinct 12× 12 modular sonar sequences are generated. When $N_{subframe}$ = 6, in a first PRS subframe, 12 patterns are generated by 12 cyclic-shifts in a frequency axis when a cyclic-shift in a time axis is 0. In a second PRS subframe, 12 different patterns from the PRS patterns used in the first subframe may be formed, and the different patterns are generated by 12 cyclic-shifts in a frequency axis when a cyclic-shift is 2 in a time axis. In third, fourth, fifth, and sixth RPS subframes, 12 different PRS patterns are generated by 12 cyclic-shifts in a frequency axis when cyclic-shifts in a time axis are 4, 6, 8, and 10, respectively.

$$f_{n_{subframe},t}(i) = (f_0((i + 2 \cdot n_{subframe}) \bmod N) + (t \bmod M)) \bmod M, \ 0 \le i < N \qquad \text{............ (13)}$$

In equation 13, (t mod M) is a remainder of t/M and used for a cyclic-shift in a frequency axis.

c) A truncated M × (N-N' ) modular sonar sequence $f_{n_{subframe},t}'(i)$, $0 \le i < N - N'$ is generated by equation 14 below. Of course, there may be a case where the truncation is not required, that is, N' has a value of "0" .

$$f_{n_{subframe},t}'(i) = f_{n_{subframe},t}(i) \text{ for } 0 \le i < N - N' \qquad \text{.................... (14)}$$

d) The PRS pattern is generated. In the PRS pattern in a two-dimensional structure including M × (N-N') frequency (subcarrier)/time (symbol), a PRS pattern for an OTDOA positioning subframe is formed in all positions where an ith available symbol axis and a $f_{n_{subframe},t}'(i)$th available subcarrier axis intersect for $0 \le i < N-N'$ (0=N-N' mod(N-N')).

e) The PRS sequence is mapped to the PRS pattern of the generated OTDOA positioning subframe.

Similarly, in a first PRS subframe of case 4, 6 patterns are generated by 6 cyclic-shifts in a frequency axis when a cyclic-shift in a time axis is 0. Accordingly, the remaining 11 cyclic-shifts in a time axis corresponding to cases where cyclic-shifts are 1-11 in a time axis are not used for forming the PRS signals but may be used for the remaining subframes. For example, in a second PRS subframe, 12 different patterns from the PRS patterns used in the first subframe may be formed, and the different patterns are generated by 12 cyclic-shifts in a frequency axis when a cyclic-shift is 2 in a time axis.

In a third PRS subframe, different PRS patterns are generated when a cyclic-shift in a time axis is 4, and then the generated PRS patterns are used. In a fourth RPS subframe, different PRS patterns are generated when a cyclic-shift in a time axis is 6, and then the generated PRS patterns are used. In a fifth RPS subframe, different PRS patterns are generated when a cyclic-shift in a time axis is 8, and then the generated PRS patterns are used. In a sixth RPS subframe, different PRS patterns are generated when a cyclic-shift in a time axis is 10, and then the generated PRS patterns are used.

The above function is represented as an equation below.

2-3. Time-varying case 4

: $N_{subframe}$ accumulations $\left( 0 \le t = N_{ID}^{cell} \bmod M < M \text{ and } t = N_{ID}^{cell} \bmod 12 \right.$, where M=12)

A method of constructing different patterns for each subframe in the $N_{subframe}$ number ($N_{subframe}$=1, 2, 4, 6) of subframes to periodically use 12 PRS subframe patterns in a time axis from the original M × N modular sonar sequence $f_0$ ={$f_0(0), f_0(1), f_0(2), f_0(3), f_0(4), f_0(5), f_0(6), f_0(7), f_0(8), f_0(9), f_0(10), f_0(11)$}={11, 0, 3, 2, 9, 4, 10, 2, 7, 9, 6, 5} or {0, 1, 4, 3, 10, 5, 11, 3, 8, 10, 7, 6} where M=12 and N=12 is as follows.

1) Case 4 ($T=\lfloor M/2 \rfloor$, $N_{subframe}$=1,2,4,6)

a) The original M × N modular sonar sequence $f_0(i)$, $0 \le i < N$ ($f(0) = f(N)$) is constructed by the construction method in table 1. In the example where M=12, $f_0$ = {$f_0(0), f_0(1), f_0(2), f_0(3), f_0(4), f_0(5), f_0(6), f_0(7), f_0(8), f_0(9), f_0(10), f_0(11)$} = {0, 1, 4, 3, 10, 5, 11, 3, 8, 10, 7, 6} is generated.

b) In a $n_{subframe}$th ($0 \le n_{subframe} = \lfloor ns/2 \rfloor < N_{subframe}$) subframe, a tth $0 \le t \le T = M$) M×N modular sonar sequence $f_{n_{subframe},t}(i)$, $0 \le i < N$ is generated by equation 15.

When M=12, T=24 and 12 distinct 12 × 12 modular sonar sequences are generated. When $N_{subframe}$ = 6, in a first PRS subframe, 6 patterns are generated by 6 cyclic-shifts in a frequency axis when a cyclic-shift in a time axis is 0. In a second PRS subframe, 12 different patterns from the PRS patterns used in the first subframe may be formed, and the different patterns are generated by 12 cyclic-shifts in a frequency axis when a cyclic-shift is 2 in a time axis.

In a third PRS subframe, different PRS patterns are generated when a cyclic-shift in a time axis is 4, and then the generated PRS patterns are used. In a fourth RPS subframe, different PRS patterns are generated when a cyclic-shift in a time axis is 6, and then the generated PRS patterns are used. In a fifth RPS subframe, different PRS patterns are generated when a cyclic-shift in a time axis is 8, and then the generated PRS patterns are used. In a sixth RPS subframe, different PRS patterns are generated when a cyclic-shift in a time axis is 10, and then the generated PRS patterns are used.

$$f_{n_{subframe},t}(i) = (f_0((i+2 \cdot n_{subframe}) \bmod N) + (t \bmod M)) \bmod M, \ 0 \le i < N \quad ............ (15)$$

In equation 15, (t mod M) is a remainder of t/M and used for a cyclic-shift in a frequency axis.

c) A truncated M × (N-N' ) modular sonar sequence $f_{n_{subframe},t}'(i)$, $0 \le i < N - N'$ is generated by equation 16 below. Of course, there may be a case where the truncation is not required, that is, N' has a value of "0" .

$$f_{n_{subframe},t}'(i) = f_{n_{subframe},t}(i) \text{ for } 0 \le i < N - N' \quad ...................... (16)$$

d) The PRS pattern is generated. In the PRS pattern in a two-dimensional structure including M×(N-N' ) frequency (subcarrier)/time (symbol), a PRS pattern for an OTDOA positioning subframe is formed in a position where an ith available symbol axis and a $f_{n_{subframe},t}(i)$th available subcarrier axis intersect and a point where an ith available symbol axis and a $(f_{n_{subframe},t}(i) +_L M/2\rfloor)$mod $M$th available subcarrier axis intersect for $0 \le i < N - N'$ $(0 = N - N' \bmod (N - N'))$.

e) The PRS sequence is mapped to the PRS pattern of the generated OTDOA positioning subframe.

At this time, a time of arrival for signal power is measured by simultaneously considering the repetitive N number of subframe patterns synthetically so that a time accumulation effect for the N number of subframes may be obtained.

The above function is represented as a table below.

2. Time varying case

: $N_{subframe}$ accumulations ($N_{subframe}$=1, 2, 4, 6)

a) Case 1: 144 cell groups, no accumulation

b) Case 2: 24 cell groups, $N_{subframe}$ accumulations

[Table 3]

| Subframe 0 | ... | Subframe N-1 |
|---|---|---|
| Case2$^{(0)}$ | Case2$^{(n\_subframe)}$ | Case2$^{(N-1)}$ |

In table 3, $f_0(i)$ of case 2$^{(n\_subframe)}$ corresponds to cyclic-shifting $f_0(i)$ of Case 2$^{(0)}$ in a time axis by 2*(n_ subframe) or n_subframe, and $t = N_{ID}^{cell} \bmod 24$ .

c) Case 3: 12 cell groups, $N_{subframe}$ accumulations

[Table 4]

| Subframe 0 | ... | Subframe N-1 |
|---|---|---|
| Case3$^{(0)}$ | Case3$^{(n\_subframe)}$ | Case3$^{(N-1)}$ |

In table 4, $f_0(i)$ of case 3$^{(n-subframe)}$ corresponds to cyclic-shifting $f_0(i)$ of Case 3$^{(0)}$ in a time axis by 2*(n_ subframe), and $t = N_{ID}^{cell} \bmod 12$ .

d) Case 4: 6 cell groups, $N_{subframe}$ accumulations

[Table 5]

| Subframe 0 | ... | Subframe N-1 |
|---|---|---|
| Case4$^{(0)}$ | Case4$^{(n\_subframe)}$ | Case4$^{(N-1)}$ |

In table 5, $f_0(i)$ of case 4$^{(n\_subframe)}$ corresponds to cyclic-shifting $f_0(i)$ Case 4$^{(0)}$ in a time axis by 2* (n_subframe), and $t = N_{ID}^{cell} \mod 6$.

As described in the above method, the time of arrival for signal power is measured in an OTDOA method by simultaneously considering repetitive patterns synthetically in order to obtain a time accumulation effect. That is, when two or more subframes are periodically used for the PRS subframe, if a time of arrival for signal power is measured in an OTDOA method by simultaneously considering all signals (in all particular time and frequency bands where REs corresponding to the pattern are located) corresponding to two or more subframe time/frequency patterns synthetically, a time accumulation effect is obtained so that errors generated in detecting a UE location may be reduced (performance may be improved).

Unlike the above case, the time of arrival for signal power in each PRS subframe is measured in order to discriminate more system-specific information. That is, if a time of arrival for signal power in each PRS subframe is separately measured, more pattern types may be generated in comparison with a case where a single subframe is used and thus more system-specific information may be discriminated.

For example, when 2 subframes are used, a total of 24 patterns are generated in a first subframe through case 2 and accordingly a maximum of 24 system-specific information pieces (cell-IDs) may be discriminated. Similarly, 24 patterns may be generated in a second subframe. When each time of arrival for signal power in each PRS subframe is separately measured, a total of 24*24=576 patterns may be obtained through 24 patterns included in each of 2 subframes. Accordingly, when 2 subframes are constructed, 576 system-specific information pieces (cell-IDs) may be discriminated.

When 4 subframes are used, 24*24*24*24 system-specific information pieces may be discriminated in the same manner. When the system-specific information is a cell-ID, since current LTE Rel-8 PCIs (Physical Cell Identities) having the total number of 504 may be discriminated by the number of cases of 576 patterns. When 4 subframes are divided into 2 groups each having 2 subframes and the above method is applied to each group, 24*24=576 system-specific information pieces may be discriminated and simultaneously a time accumulation effect as much as 2 may be obtained.

When 6 subframes are used, 24*24=576 system-specific information pieces may be discriminated and simultaneously a time accumulation effect as much as 3 may be obtained by applying the same method to each group, the 6 subframes being divided into 3 groups and the 3 groups each having 2 subframes.

That is represented as a table below.

3. Time varying case

: $N_{subframe}/2$ accumulations ($N_{subframe}$=2, 4, 6)

1) Case 2-1: 24*24=576 cell groups (504 PCIs may be all discriminated), 1 accumulation

[Table 6]

| Subframe 0 | Subframe 1 |
|---|---|
| Case2$^{(0)}$ | Case2$^{(1)}$ |

In table 6, $f_0(i)$ of case 2$^{(1)}$ corresponds to cyclic-shifting $f_0(i)$ of case 2$^{(0)}$ in a time axis by 2(or 1), and t of case 2$^{(0)}$ is still defined by $t = N_{ID}^{cell} \mod 24$, but of case 2$^{(1)}$ is defined by $t = \left\lfloor N_{ID}^{cell} / 24 \right\rfloor$.

That is, when times of arrival for signal power are separately measured in each of the first PRS subframe and the second PRS subframe having generated 24 different patterns, a total of 24*24=576 patterns may be obtained through 24 patterns included in each of 2 subframes. Accordingly, 576 system-specific information pieces (cell-IDs) may be discriminated.

Case 2-2: 24*24=576 cell groups (504 PCIs may be all discriminated), 2 accumulations

[Table 7]

| Subframe 0 | Subframe 1 | Subframe 2 | Subframe 3 |
|---|---|---|---|
| Case2$^{(0)}$ | Case2$^{(1)}$ | Case2$^{(2)}$ | Case2$^{(3)}$ |

In table 7, $f_0(i)$ of case 2$^{(1)}$ corresponds to cyclic-shifting $f_0(i)$ of case 2$^{(0)}$ in a time axis by 2 (or 1), $f_0(i)$ of case 2$^{(2)}$ corresponds to cyclic-shifting $f_0(i)$ of case 2$^{(0)}$ in a time axis by 4 (or 2), $f_0(i)$ of case 2$^{(3)}$ corresponds to cyclic-shifting

$f_0(i)$ of case $2^{(0)}$ in a time axis by 6 (or 3), and t of case $2^{(0)}$ and case $2^{(2)}$ is still defined by $t = N_{ID}^{rcell} \bmod 24$, but t of

case $2^{(1)}$ and case $2^{(3)}$ are defined $t = \lfloor N_{ID}^{rcell} / 24 \rfloor$.

When 4 subframes are used, 24*24=576 system-specific information pieces may be discriminated and simultaneously a time accumulation effect as much as 2 may be obtained by applying the same method to each group, the 4 subframes divided into 2 groups and the 2 groups each having 2 subframes.

3) Case 2-2: 24*24=576 cell groups (504 PCIs may be all discriminated), 3 accumulations

[Table 8]

| Subframe 0 | ... | Subframe 5 |
|---|---|---|
| Case2$^{(n\_subframe=0)}$ | Case2$^{(n\_subframe)}$ | Case2$^{(n\_subframe=5)}$ |

In table 8, $f_0(i)$ of case $2^{(n\_subframe)}$ corresponds to cyclic-shifting $f_0(i)$ of case $2^{(0)}$ in a time axis by 2*(n_subframe) or n_subframe, and t of case $2^{(n\_subframe=even\ number(0,2,4))}$ is still defined by $t = N_{ID}^{rcell} \bmod 24$, but t of case $2^{(n\_subframe=odd}$ number (1, 3, 5) defined by $t = \lfloor N_{ID}^{rcell} / 24 \rfloor$.

When 6 subframes are used, 24*24=576 system-specific information pieces may be discriminated and simultaneously a time accumulation effect as much as 3 may be obtained by applying the same method to each group, the 6 subframes being divided into 3 groups and the 3 groups each having 2 subframes.

Hereinafter, an example of a downlink physical channel in a wireless communication system to which a method and an apparatus for allocating PRS patterns by using the M × N modular sonar sequence according to an embodiment of the present invention is described.

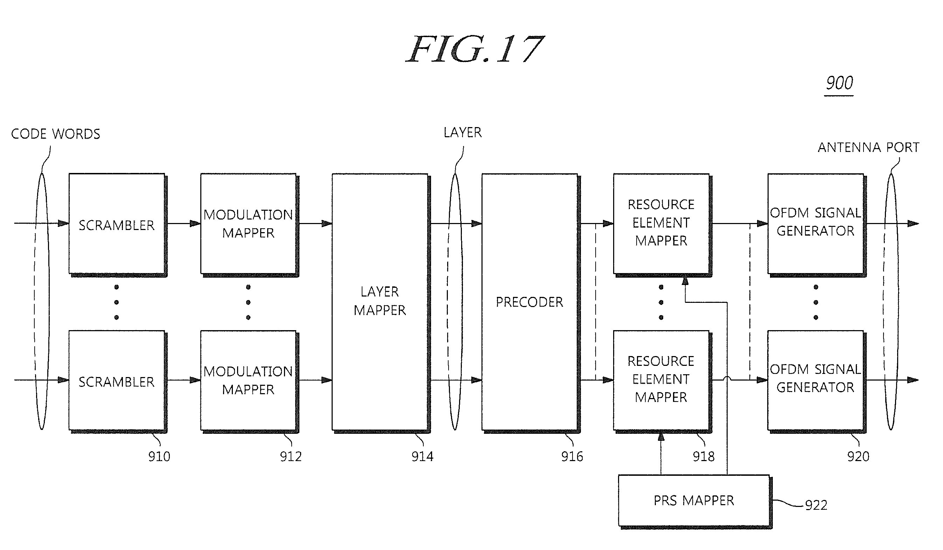

FIG. 17 illustrates a structure of the downlink physical channel in a wireless communication system to which embodiments of the present invention are applied.

Referring to FIG. 17, the wireless communication system 900 to which embodiments of the present invention are applied includes a scrambler 910, a modulation mapper 912, a layer mapper 914, a precoder 916, a resource element mapper 918, and an OFDM signal generator 920. Further, the wireless communication system 900 includes a PRS mapper 922. At this time, the PRS mapper may be the same as the aforementioned PRS mapper 120 or 630 illustrated in FIGs. 1 or 9. The PRS mapper 922 is associated with the resource element mapper 918 and performs a mapping process in a resource element corresponding to a PRS resource in a signal resource mapping process in all resource elements of the resource mapper 918. That is, the PRS mapper corresponds to a device for performing a special function of the resource element mapper 918 associated with the PRS in the mapping of the resource element. When both components are the same, the wireless communication system 900 may include other components other than the PRS mappers 120 and 630 of FIGs. 1 and 9.

Meanwhile, the wireless communication system 900 may be a communication system of a base station or a transmission device of a base station including an apparatus illustrated in FIG. 1 or FIG. 9 for transmitting the PRS, respectively.

Bits input in a form of codewords via a downlink channel coding are scrambled by the scrambler 910 and then input to the modulation mapper 912. The modulation mapper 912 modulates the scrambled bits to complex modulation symbols, and the layer mapper 914 maps the complex modulation symbols to one transmission layer or a plurality of transmission layers. Then, the precoder 916 precodes complex modulation symbols on each transmission channel of an antenna port. Next, the resource element mapper 918 maps the complex modulation symbol for each antenna port to a corresponding resource element. Meanwhile, the PRS mapper 922 forms a PRS pattern from a second M × N modular sonar sequence generated through the M × N modular sonar sequence generator 110 described above with reference to FIG. 1 and maps the PRS, or forms a PRS pattern from a second N × (N-N')modular sonar sequence generated through the N × (N-N') modular sonar sequence generator 110 described above with reference to FIG. 1 and maps the PRS.

The PRS mapper 922 is generated by a particular RPS sequence in the wireless communication system 900, allocates PRSs generated via at least one of apparatuses 910, 912, 914, and 916 to resource elements corresponding to resources, in which a particular OFDM symbol (time axis) and a subcarrier (frequency axis) are located, according to PRS patterns formed from the modular sonar sequence, and multiplex with a base station transmission frame according to a predetermined frame timing.

At this time, the existing RS and control signals and data input from the precoder 916 are allocated to resource elements corresponding to resources, in which a particular OFDM symbol (time axis) and a subcarrier (frequency axis) are located, by the resource element mapper 918. Here, the PRS mapper corresponds to an apparatus responsible for performing a special function (of forming a PRS pattern to map the PRS) added to the resource element mapper 918 in order to allocate the PRS to a corresponding each resource element.

Then, the OFDM signal generator 920 generates a complex time domain OFDM signal for each antenna. The complex time domain OFDM signal is transmitted through an antenna port.

The structure of generating the downlink physical channel signal in the wireless communication system to which embodiments of the present invention are applied has been described with reference to FIG. 17, but the present invention is not limited thereto. That is, in the structure of generating the downlink physical channel signal in the wireless communication system to which embodiments of the present invention is applied, other components may be omitted, replaced with or changed to other components, or other components may be added.

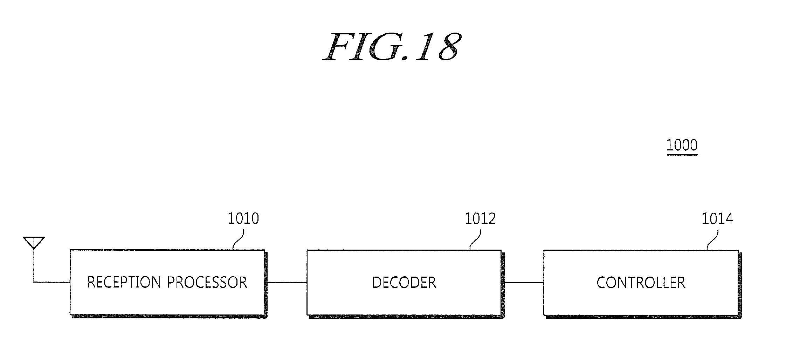

FIG. 18 illustrates a structure of a receiver in a wireless communication system.

Referring to FIG. 18, a receiver 1000 of a terminal in a wireless communication system includes a reception processor 1010, a decoder 1912, and a controller 1014. At this time, the receiver 1000 may be a base station receiving information on the received PRS again from a terminal (UE) including the apparatus of FIG. 1 or FIG. 9 for receiving and decoding the PRS.

The signal received through each antenna port is converted to a complex time domain signal by the reception processor 1010. Further, the reception processor 1010 extracts PRSs of particular resource elements from received signals. The decoder 1012 decodes the extracted PRSs. The controller 1014 measures a distance from a base station by using a relative arrival time from the base station through information on the decoded PRSs.

At this time, the controller 1014 can calculate the distance from the base station by using the relative arrival time from the base station, or the controller 1014 transmits the relative arrival time to the base station and then the base station can calculate the distance. At this time, since distances from three or more base stations are measured, a terminal location may be calculated.

At this time, when PRS patterns specific for each cell are generated and transmitted by using the modular sonar sequence in two or more subframes, the receiver accumulates information received from PRS patterns of subframes for a predetermined time and then can measure a relative arrival time from each cell.

As described above, the time of arrival for signal power may be measured in an OTDOA method by simultaneously considering repetitive patterns synthetically in order to obtain the time accumulation effect. That is, when two or more subframes are periodically used for the PRS subframe, if a time of arrival for signal power is measured in an OTDOA method by simultaneously considering all signals (in all particular time and frequency bands where REs corresponding to the pattern are located) corresponding to two or more subframe time/frequency patterns synthetically, a time accumulation effect is obtained so that errors generated in detecting a UE location may be reduced (performance may be improved).

Unlike the above case, each time of arrival for signal power in each PRS subframe may be measured in order to discriminate more system-specific information. That is, if a time of arrival for signal power in each PRS subframe is separately measured, more pattern types may be generated in comparison with a case where a single subframe is used and thus more system-specific information may be discriminated.

The receiver 1000 is a device, which makes a pair with the wireless communication system or transmitter 900 described with reference to FIG. 17 and receives a signal transmitted from the transmitter 900. The receiver 1000 includes components for processing a signal of a reverse process of the transmitter 900. Accordingly, a detailed description for the receiver 1000 may be replaced with a detailed description for the components for processing the signal of the reverse process of the transmitter 900 in a one-to-one correspondence manner.

So far, embodiments of the present invention have been described with reference to the figures, but the present invention is not limited thereto.

Meanwhile, the methods of generating 144, 24, 12, and 6 PRS patterns in one subframe are described in the embodiments of the present invention, but they are only illustrative. Further, various numbers of PRS patterns may be generated according to one subframe type and the PRS patterns may be used for the positioning of the OTDOA method.

In the embodiments, the method of generating the PRS patterns with different patterns, which are specific for each cell, by using the modular sonar sequence based on one subframe has been described. However, in one or more subframes of a radio frame including subframes, the PRS patterns specific for each cell may be generated by using the aforementioned modular sonar sequence. For example, in one radio frame including 10 subframes, PRS patterns specific for each cell may be generated in 1, 2, 3, 4, or 6 subframes by using the modular sonar sequence.

Further, the PRS patterns specific for each cell may generated by using the modular sonar sequence in the particular number of subframes in every radio frame on a frame period of 16, 32, 64, or 128 in an aspect of each radio frame. For example, when the 10 number of 1 ms subframes consist of one radio frame (a total of 10 ms), cell-specific PRS patterns may be generated in 1, 2, 3, 4, or 6 subframes of one radio frame by using the modular sonar sequence on a 32 radio frame period (320 ms).

At this time, when cell-specific PRS patterns are generated and transmitted by using the modular sonar sequence in two or more subframes, the receiver accumulates information received from PRS patterns of subframes for a predetermined time and then can measure a relative arrival time from each cell.

In the embodiments, it has been described that the M × N modular sonar sequence is used for generating the PRS patterns, but the M × N modular sonar sequence according to the present invention may be used for other reference signals other than the PRS, for example, a particular signal inserted into a frequency domain grid for a frequency domain channel estimation at regular or irregular intervals, a reference signal which is a symbol, a reference symbol, or a pilot symbol. For example, reference signals in an uplink transmission include a DM-RS (DeModulation RS) and an SRS (Sounding RS). In a downlink transmission, the M × N modular sonar sequence may be used in a permissible range for generating patterns of a CRS (Cell-specific RS), an MBSFN RS, and a UE-specific RS as the reference signal, and a CSI-RS (CQI-RS) as the reference signal transmitted from a base station in order to enable a user device (terminal) to obtain Channel Spatial Information (CSI) of a central cell or neighbor cells. Of course, the M × N modular sonar sequence may be used for all reference signals currently defined or to be defined in the future, or all reference signals having a changed definition.

In the embodiments, it has been described that the M × N modular sonar sequence may be used for forming the pattern of the reference signals including the PRS, but one or more sequences having the same characteristic as that of the aforementioned M × N modular sonar sequence may be used for generating the pattern of the reference signal including the PRS in the present invention. For example, as described in the example, the M × N modular sonar sequence where M=N has the same characteristic as that of the N × N modular (or perfect) costas array. In this case, the modular sonar sequence includes the modular costas array.

A method of generating the PRS according to still another embodiment of the present invention is described below.

1. A basic PRS pattern is formed in a 1/2 resource block including 2 slots and 6 subcarriers by a particular sequence. At this time, an example of a used particular sequence is {0, 1, 2, 3, 4, 5, 6}. Further, the 2 slots correspond to 2 time slots included in subframes for the positioning. Here, the method of forming the PRS patterns by the particular sequence is described below.

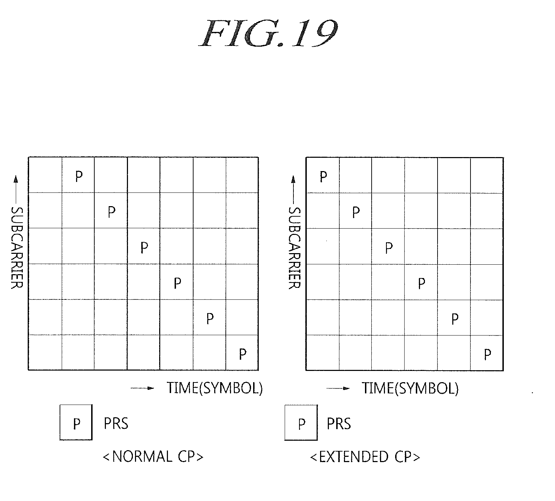

1-a) When the particular sequence corresponds to $f(i) = \{f(0), f(1), f(2), f(3), f(4), f(5)\} = \{0, 1, 2, 3, 4, 5, 6\}$, the PRS pattern is formed in a position of a subcarrier on a frequency domain corresponding to a first value of sequences in the last symbol in each of the two slots as shown in FIG. 19. That is, in the last symbol, the PRS pattern is formed in a 0th subcarrier position since a first value of sequences is 0. Next, in a second symbol from the last, the PRS pattern is formed in a subcarrier position on a frequency domain corresponding to a second value of sequences. That is, in the second symbol from the last, the PRS pattern is formed in 1 st subcarrier position since the second value of sequences is 1. In the same way, PRS patterns are formed in corresponding subcarrier positions on a frequency domain corresponding to values of sequences from the last symbol to a 6th symbol from the last in each of the two slots.

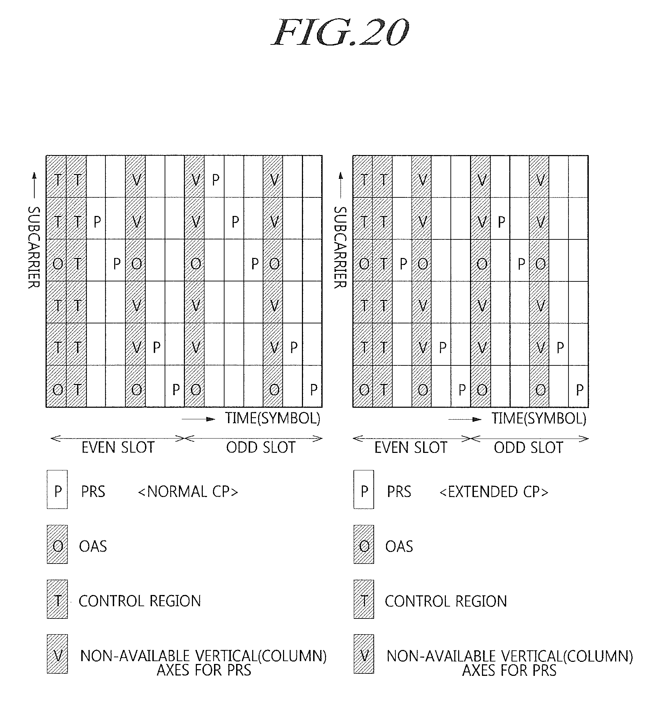

1-b) As shown in FIG. 20, PRS patterns formed in positions corresponding to symbol axes including control regions such as a PDCCH (Physical Downlink control CHannel), a PHICH (Physical Hybrid-ARQ Indicator CHannel), and a PCFICH (Physical Control Format Indicator CHannel) and a CRS (Cell-specific Reference Signal), and REs (Reference Elements) including a PSS (Primary Synchronization Signal), an SSS (Secondary Synchronization Signal), and a BCH (Broadcast Channel) are excluded from the generated basic PRS patterns.

1-equation) A process of forming the basic PRS patterns through 1-a) and 1-b) is represented by an equation below.

When it is determined that ν indicates a value for defining locations of different PRSs in a frequency domain, $N_{symb}^{DL}$ indicates the number of all OFDM symbols in each slot in a downlink, the basic PRS pattern for a corresponding $l$ [th] OFDM symbol at each slot is formed based on equation 17 below.

$$\nu = 5 - l + N_{CP}$$

$$l = N_{symb}^{DL} - i \quad \text{for } i = 1, 2, 4, \text{L} \ , 4 + (n_s \bmod 2) + N_{CP}$$

$$N_{CP} = \begin{cases} 1 & \text{for normal CP} \\ 0 & \text{for extended CP} \end{cases} \qquad \dots\dots\dots\dots\dots\dots\dots (17)$$

A value of $N_{symb}^{DL}$ is 7 when a normal CP is used, a value of $N_{symb}^{DL}$ is 6 when an extended CP is used. A value of ($n_s$ mod 2) is 0 in even slots, and a value of ($n_s$ mod 2) is 1 in odd slots. Accordingly, $l$ in equation 17 may be defined as follows.

$$l = \begin{cases} 2,3,5,6 & \text{if } n_s \bmod 2 = 0 \text{ and } N_{CP} = 1 \\ 1,2,3,5,6 & \text{if } n_s \bmod 2 = 1 \text{ and } N_{CP} = 1 \\ 2,4,5 & \text{if } n_s \bmod 2 = 0 \text{ and } N_{CP} = 0 \\ 1,2,4,5 & \text{if } n_s \bmod 2 = 1 \text{ and } N_{CP} = 0 \end{cases}$$

2. The basic PRS patterns formed in 2 slots consisting of one subframe and 1/2 resource block including 6 subcarriers are allocated to the N$_{subframe}$ number of subframes up to a system bandwidth in a frequency axis and every particular period in a time axis.

For example, when a system bandwidth corresponds to 10 Mhz in a frequency axis, a total of 50 RBs exist, so that the basic PRS pattern formed in the 1/2 RB is repeated 100 times in a frequency axis without any change. When the number of total RBs corresponding to the downlink system bandwidth is $N_{RB}^{DL}$, the total number of $2 \cdot N_{RB}^{DL}$ is repeated.

The basic PRS patterns are allocated in the N$_{subframe}$ number of subframes in every particular period, and are differently distributed for each Subframe Number (SFN), each cell-specific information piece such as a PCI (Physical Cell Identity), and each time axis, unlike in a frequency axis. That is implemented by identically cyclic-shifting subcarrier locations, in which the PRS in each symbol is formed, as much as $v_{shift}$ by adding $v_{shift}$ indicating values to be shifted in a frequency axis to $v$ indicating values for defining locations of different positioning reference signals in a frequency domain according to a subframe number and cell-specific information.

Process 2 for a k$^{th}$ subcarrier in an entire system bandwidth including $N_{RB}^{DL} N_{sc}^{RB}$ number of subcarriers is represented as equation 12. $N_{RB}^{DL}$ refers to the number of total RBs corresponding to the downlink system bandwidth, $N_{sc}^{RB}$ refers to the number of subcarriers in one RB, and a normal subframe including the positioning subframe may use equation 18 below.

$$k = 6m + \left( v + v_{\text{shift}} \right) \bmod 6$$
$$m = 0,1,...,2 \cdot N_{RB}^{DL} - 1 \qquad \dots\dots\dots\dots (18)$$

In equation 18, $v$ indicates values for defining locations of different PRSs described in process 1 in a frequency domain, and $v_{shift}$ indicates values for identically and additionally cyclic-shifting subcarrier locations, in which the PRS in each symbol is formed, according to a subframe number and cell-specific information. At this time, $v_{shift}$ may include remainders generated by dividing a value generated by the subframe number and a cell-specific information function by 6, which is a maximum available frequency shift value. Particularly, $v_{shift}$ is obtained by deriving one or more pseudo-random sequence values from a pseudo-random sequence, which is generated with cell-specific information as an initial value such as a PCI, by a function of positioning subframe numbers, multiplying the derived pseudo-random sequence values by a predetermined constant, calculating a sum of the multiplied values, and then obtaining a remainder remaining after dividing the sum by 6, which corresponds to a maximum available frequency shift value. The above function is represented as equation 19 below.

$$v_{\text{shift}} = f(n_{subframe}, N_{cell}^{ID}) \rightarrow v_{\text{shift}} = (\sum_i a^i \cdot c(f(n_{subframe}, i))) \bmod 6$$

$$\dots\dots\dots\dots\dots\dots (19)$$

In equation 19, $0 \le N_{Cell}^{ID} < 504$ denotes a PCI, $a$ denotes a constant, $c(i)$ denotes a pseudo-random sequence, and $c_{init} = N_{Cell}^{ID}$ is given to an initial value of $c$ and initialized in every subframe for each positioning.

Processes 1 and 2 together are represented as an equation below.

That is, a PRS $r_{l,n_s}(m)$ mapped to $a_{k,l}^{(p)}$, which is a complex-valued modulation symbol used as a positioning reference symbol for an antenna port $p$ in a $n_s$ th slot is represented as equation 20.

$$a_{k,l}^{(p)} = r_{l,n_s}(m')$$

$$k = 6m + (v + v_{\text{shift}}) \bmod 6$$
$$l = N_{symb}^{DL} - i \quad \text{for } i = 1, 2, 4, L, 4 + (n_s \bmod 2) + N_{CP}$$
$$m = 0, 1, ..., 2 \cdot N_{RB}^{DL} - 1$$
$$m' = m + N_{RB}^{\max,DL} - N_{RB}^{DL}$$

$$N_{CP} = \begin{cases} 1 & \text{for normal CP} \\ 0 & \text{for extended CP} \end{cases}$$

$$\dots\dots\dots\dots\dots\dots (20)$$

In equation 20, $l$ is represented as follows.

$$l = \begin{cases} 2, 3, 5, 6 & \text{if } n_s \bmod 2 = 0 \text{ and } N_{CP} = 1 \\ 1, 2, 3, 5, 6 & \text{if } n_s \bmod 2 = 1 \text{ and } N_{CP} = 1 \\ 2, 4, 5 & \text{if } n_s \bmod 2 = 0 \text{ and } N_{CP} = 0 \\ 1, 2, 4, 5 & \text{if } n_s \bmod 2 = 1 \text{ and } N_{CP} = 0 \end{cases}$$

At this time, $v$ indicating values for defining locations of different positioning reference signals in a frequency

domain and $v_{shift}$ are represented as equation 21 below. Particularly, $v_{shift}$ is a cell-specific and positioning subframe number-specific value.

$$v = 5 - l + N_{CP}$$

$$v_{\text{shift}} = f(n_{subframe}, N_{cell}^{ID}) \rightarrow v_{\text{shift}} = (\sum_i a^i \cdot c(f(n_{subframe}, i))) \bmod 6$$

........................... (21)

In equation 21, $n_{subframe}$ corresponds to a positioning subframe number, and $c_{init} = N_{Cell}^{ID}$ is given as an initial value of $c$ in pseudo-random sequence $c(i)$ and is initialized in every subframe for each positioning.

Methods of generated PRS patterns by using the modular sonar sequence proposed herein may be applied to all OFDM-based wireless mobile communication systems. Examples of OFDM-based wireless mobile communication systems include an E-UTRAN (LTE), an E-EUTRAN (LTE-Advanced), WIBRO, and Mobile Wi-MAX, and may be also applied to all wireless mobile communication systems in which all OFDM-based mobile communication terminals require the positioning.

While the exemplary embodiments have been shown and described, it will be understood by those skilled in the art that various changes in form and details may be made thereto without departing from the spirit and scope of this disclosure as defined by the appended claims and their equivalents. Thus, as long as modifications fall within the scope of the appended claims and their equivalents, they should not be misconstrued as a departure from the scope of the invention itself.

This application is further related to the U.S. Patent Application having attorney docket number (your docket number), which claims priority from and the benefit of Korean Patent Application Nos. 10-2009-0031548, 10-2009-0038564, 10-2009-0056705, 10-2009-0056708, and 10-2009-0059978, filed on April 10, 2009, April 30, 2009, June 24, 2009, June 24, 2009, and July 1, 2009, respectively. These applications, assigned to the assignee of the current application, are hereby incorporated by reference for all purposes as if fully set forth herein.

## Claims

1. A method of generating a positioning reference signal pattern for positioning a User Equipment (UE) in a wireless communication system, the method comprising:

    generating a first MxN modular sonar sequence based on M and N corresponding to determined modular sonar sequence sizes;
    converting the generated first MxN modular sonar sequence to a second MxN modular sonar sequence according to system-specific information; and
    forming a positioning reference signal pattern from the second MxN modular sonar sequence and mapping positioning reference signals.

2. The method of claim 1, wherein, in generating of the first MxN modular sonar sequence based on M and N corresponding to the determined modular sonar sequence sizes,
   for M and N, which are modular sonar sequence sizes determined from combinations capable of using as many available rows and columns as possible from modulos (Ms) and lengths (Ns) combinable by modular sonar sequence generating methods and in consideration of numbers of rows and columns available for positioning reference signals in a two dimensional single subframe structure having a frequency axis as a row and a time axis as a column for each subframe,
   the first MxN modular sonar sequence is generated using the modular sonar sequence generating methods in which M and N can be combined.

3. The method of claim 2, wherein the modular sonar sequence generating methods comprise at least one of "Quadratic method", "Exponential Welch method", "Logarithmic Welch method", "Lempel method", "Golomb method", "Extended exponential Welch method", and "Shift sequence method".

4. The method of claim 1, wherein, in converting of the generated first MxN modular sonar sequence to the second MxN modular sonar sequence according to the system-specific information, the first MxN modular sonar sequence f is converted to the second MxN modular sonar sequence g by an equation, g(i) = uf(i) + si + a, wherein u, s, and a have different values according to the system-specific information.

5. The method of claim 1, wherein, in converting of the generated first MxN modular sonar sequence to the second MxN modular sonar sequence according to the system-specific information, the first MxN modular sonar sequence is converted to the second MxN modular sonar sequence by using a frequency axis cyclic shift value and a time axis cyclic shift value, which have different values according to the system-specific information.

6. The method of claim 5, wherein, when the number of all system-specific information elements to be discriminated is T, one of a quotient and a remainder in a division of t by M or N is a frequency axis cyclic shift value and the other of the quotient and the remainder is a time axis cyclic shift value, wherein t has a value between 0 and (T - 1).

7. The method of claim 6, wherein, when a quotient of a division of t by M is $\lfloor t/M \rfloor$ and a remainder of the division is (t mod M), the first MxN modular sonar sequence $f_0$ is converted to the second MxN modular sonar sequence $f_t$ by an equation, $f_t(i) = (f_0((i+(\lfloor t/M \rfloor))\bmod N) + (t \bmod M)) \bmod M$.

8. The method of claim 1, wherein the system-specific information comprises at least one of base station (cell) information, relay node information, mobile station (user equipment) information, subframe number, and Cyclic Prefix (CP) size.

9. The method of claim 8, wherein, among the system-specific information, the base station (cell) information corresponds to base station (cell) identifier (ID).

10. The method of claim 1, wherein, in forming of the positioning reference signal pattern from the second MxN modular sonar sequence and mapping of the positioning reference signals, in a two dimensional single subframe structure having a frequency axis as a row and a time axis as a column for each subframe, the $i^{th}$ sequence value f(i) of the second MxN modular sonar sequence is mapped to a position at which the $i^{th}$ available column and the $f(i)^{th}$ available row intersect when M corresponds to subcarriers and N corresponds to symbols in the second MxN modular sonar sequence, and the $i^{th}$ sequence value f(i) of the second MxN modular sonar sequence is mapped to a position at which the $i^{th}$ available row and the $f(i)^{th}$ available column intersect when M corresponds to symbols and N corresponds to subcarriers in the second MxN modular sonar sequence.

11. The method of claim 1, wherein, when M = 11 and N = 10, the first MxN modular sonar sequence is generated by at least one of the "Exponential Welch method" and the "Extended exponential Welch method" and corresponds to one of {2,4,8,5,10,9,7,3,6,1}, {1,3,7,4,9,8,6,2,5,11}, and {1,2,4,8,5,10,9,7,3,6}.

12. The method of claim 1, wherein, when M = 10 and N = 9, the first MxN modular sonar sequence is generated by at least one of the "Lempel method" and the "Golomb method" and corresponds to {5,3,2,7,1,8,4,6,9}.

13. The method of claim 1, wherein, when M = 8 and N = 7, the first MxN modular sonar sequence is generated by at least one of the "Lempel method" and the "Golomb method" and corresponds to {2,1,6,4,7,3,5}.

14. A method of generating a positioning reference signal pattern for positioning a User Equipment (UE) in a wireless communication system, the method comprising:

generating a first MxN modular sonar sequence based on M and N corresponding to determined modular sonar sequence sizes;

generating a first M×(N-N') modular sonar sequence by truncating an end part having a length N' out of the generated first MxN modular sonar sequence having a length N;

converting the first M×(N-N') modular sonar sequence to a second M×(N-N') modular sonar sequence according to system-specific information; and

forming a positioning reference signal pattern from the second M×(N-N') modular sonar sequence and mapping positioning reference signals.

15. A method of generating a positioning reference signal pattern for positioning a User Equipment (UE) in a wireless communication system, the method comprising:

generating a first MxN modular sonar sequence based on M and N corresponding to determined modular sonar sequence sizes;

converting the generated first MxN modular sonar sequence to a second MxN modular sonar sequence according to system-specific information;

generating a second M×(N-N') modular sonar sequence by truncating an end part having a length N' out of the second MxN modular sonar sequence having a length N; and

forming a positioning reference signal pattern from the second M×(N-N') modular sonar sequence and mapping positioning reference signals.

16. The method of claim 14 or 15, wherein, when M = N, the first MxN modular sonar sequence corresponds to a "Costas array".

17. The method of claim 14 or 15, wherein, when M = 12 and N = 12, the first MxN modular sonar sequence is generated by the "Logarithmic Welch method" and corresponds to one of {12(=0),1,4,2,9,5,11,3,8,10,7,6} and {11,0,3,1,8,4,10,2,7,9,6,5}.

18. The method of claim 14 or 15, wherein, when M = 12 and N = 1, the first MxN modular sonar sequence is generated by at least one of the "Lempel method" and the "Golomb method" and corresponds to {6,10,5,7,3,1,4,9,8,2,11}.

19. An apparatus for generating a positioning reference signal pattern for positioning a User Equipment (UE) in a wireless communication system, the apparatus comprising:

an MxN modular sonar sequence generator for generating a first MxN modular sonar sequence based on M and N corresponding to determined modular sonar sequence sizes, and converting the generated first MxN modular sonar sequence to a second MxN modular sonar sequence according to system-specific information; and

a positioning reference signal mapper for forming a positioning reference signal pattern from the second MxN modular sonar sequence and mapping positioning reference signals.

20. An apparatus for generating a positioning reference signal pattern for positioning a User Equipment (UE) in a wireless communication system, the apparatus comprising:

an MxN modular sonar sequence generator for generating a first MxN modular sonar sequence based on M and N corresponding to determined modular sonar sequence sizes,

an M×(N-N') modular sonar sequence generator for generating a first M×(N-N') modular sonar sequence by truncating an end part having a length N' out of the generated first MxN modular sonar sequence having a length N, and converting the first M×(N-N') modular sonar sequence to a second M×(N-N') modular sonar sequence according to system-specific information; and

a positioning reference signal mapper for forming a positioning reference signal pattern from the second M×(N-N') modular sonar sequence and mapping positioning reference signals.

21. An apparatus of generating a positioning reference signal pattern for positioning a User Equipment (UE) in a wireless communication system, the apparatus comprising:

an MxN modular sonar sequence generator for generating a first MxN modular sonar sequence based on M and N corresponding to determined modular sonar sequence sizes;

an M×(N-N') modular sonar sequence generator for converting the generated first MxN modular sonar sequence to a second MxN modular sonar sequence according to system-specific information, and generating a second M×(N-N') modular sonar sequence by truncating an end part having a length N' out of the second MxN modular sonar sequence having a length N; and

a positioning reference signal mapper for forming a positioning reference signal pattern from the second M×(N-N') modular sonar sequence and mapping positioning reference signals.

22. A method of generating a signal pattern in a wireless communication system including one or more base stations and one or more User Equipments (UEs), each of the base station and UEs including one or more antennas and transmitting and receiving a particular signal including one or more symbols in resource blocks, each of the resource blocks including a plurality of Orthogonal Frequency Division Multiplexing (OFDM) subcarriers and a plurality of OFDM symbols in one time slot within a radio frame, the radio frame including a plurality of subframes, the method comprising:

generating a first MxN modular sonar sequence based on determined M and N;
converting the generated first MxN modular sonar sequence to a second MxN modular sonar sequence according to system-specific information; and
forming a pattern of the particular signal from the second MxN modular sonar sequence.

23. A method of generating a signal pattern in a wireless communication system including one or more base stations and one or more User Equipments (UEs), each of the base station and UEs including one or more antennas and transmitting and receiving a particular signal including one or more symbols in resource blocks, each of the resource blocks including a plurality of Orthogonal Frequency Division Multiplexing (OFDM) subcarriers and a plurality of OFDM symbols in one time slot within a radio frame, the radio frame including a plurality of subframes, the method comprising:

generating a first MxN modular sonar sequence based on determined M and N;
converting the generated first MxN modular sonar sequence to a second MxN modular sonar sequence according to system-specific information;
generating a second M×(N-N') modular sonar sequence by truncating an end part having a length N' out of the second MxN modular sonar sequence having a length N; and
forming a pattern of the particular signal from the second M×(N-N') modular sonar sequence.

24. The method of claim 22 or 23, wherein the particular signal is a signal transmitted at a particular time and in a particular frequency band for at least one of channel estimation, position estimation, transmission and reception of control information, and transmission and reception of feedback information, which are necessary for wireless communication between a UE and a base station.

25. The method of claim 22 or 23, wherein the particular signal is a positioning reference signal for positioning a UE.

26. The method of claim 22 or 23, wherein, in converting of the generated first MxN modular sonar sequence to the second MxN modular sonar sequence,
the generated first MxN modular sonar sequence is converted to the second MxN modular sonar sequence according to system-specific information by cyclic-shifting the first MxN modular sonar sequence for both of a subcarrier axis and a symbol axis in the subframe including the OFDM subcarriers and the OFDM symbols, by cyclic-shifting the first MxN modular sonar sequence for only one of the subcarrier axis and the symbol axis, or by cyclic-shifting the first MxN modular sonar sequence for only a part of the subcarrier axis or only a part of the symbol axis.

27. The method of claim 22 or 23, wherein, in converting of the generated first MxN modular sonar sequence to the second MxN modular sonar sequence according to the system-specific information,
the generated first MxN modular sonar sequence is converted to the second MxN modular sonar sequence by using a frequency axis cyclic shift value and a time axis cyclic shift value, which have different values according to the system-specific information.

28. The method of claim 27, wherein, when the number of all system-specific information elements to be discriminated is T,
one of a quotient and a remainder in a division of t by M or N is a frequency axis cyclic shift value and the other of the quotient and the remainder is a time axis cyclic shift value, wherein t has a value between 0 and (T - 1).

**29.** The method of claim 28, wherein, when a quotient of a division of t by M is $\lfloor t/M \rfloor$ and a remainder of the division is (t mod M),

the first MxN modular sonar sequence $f_0$ is converted to the second MxN modular sonar sequence $f_t$ by an equation,

$f_t(i) = (f_0((i+(\lfloor t/M \rfloor))\mod N) + (t \mod M)) \mod M$.

**30.** The method of claim 28, wherein, when a quotient of a division of t by M is $\lfloor t/M \rfloor$, a remainder of the division is (t mod M), M =12, and N =12, $0 \leq t = N_{ID}^{cell}$ mod 144 < 144 and the first MxN modular sonar sequence $f_0$ is converted to the second MxN modular sonar sequence $f_t$ by an equation, $f_t(i) = (f_0((i+(\lfloor t/12 \rfloor))\mod 12)+(t \mod 12)) \mod 12$.

**31.** The method of claim 28, wherein, when a quotient of a division of t by M is $\lfloor t/M \rfloor$, a remainder of the division is (t mod M), T = 24, M =12, and N =12,

$0 \leq t = N_{ID}^{cell}$ mod 24 < 24 and the first MxN modular sonar sequence $f_0$ is converted to the second MxN modular sonar sequence $f_t$ by an equation, $f_t(i) = (f_0((i+(\lfloor t/12 \rfloor))\mod 12)+(t \mod 12)) \mod 12$, or an equation, $f_t(i) = (f_0((i+ (6\lfloor t/12 \rfloor))\mod 12)+(t \mod 12)) \mod 12$.

**32.** The method of claim 28, wherein, when a quotient of a division of t by M is $\lfloor t/M \rfloor$, a remainder of the division is (t mod M), T = 12, M =12, and N =12,

$0 \leq t = N_{ID}^{cell}$ mod 12 < 12 and the first MxN modular sonar sequence $f_0$ is converted to the second MxN modular sonar sequence $f_t$ by an equation, $f_t(i) = (f_0(i)+ t) \mod 12$.

**33.** The method of claim 28, wherein, when a quotient of a division of t by M is $\lfloor t/M \rfloor$, a remainder of the division is (t mod M), T = 6, M =12, and N =12,

$0 \leq t = N_{ID}^{cell}$ mod 6 < 6 and the first MxN modular sonar sequence $f_0$ is converted to the second MxN modular sonar sequence $f_t$ by an equation, $f_t(i) = (f_0(i)+t) \mod 12$.

**34.** The method of claim 30, 31, 32, or 33, wherein $0 \leq N_{ID}^{cell} < 504$, and corresponds to a physical cell identifier (ID).

**35.** The method of claim 22 or 23 wherein, in forming of the pattern of the particular signal from the generated modular sonar sequence,

for the $i^{th}$ sequence value f(i) of the generated modular sonar sequence in a two dimensional single subframe structure having a frequency axis as a row and a time axis as a column for each subframe,

the pattern of the particular signal for the subframe is formed at a position at which the $i^{th}$ available column and the $f(i)^{th}$ available row intersect.

**36.** The method of claim 22 or 23, wherein, in forming of the pattern of the particular signal from the generated modular sonar sequence,

for the $i^{th}$ sequence value f(i) of the generated modular sonar sequence in a two dimensional single subframe structure having a frequency axis as a row and a time axis as a column for each subframe,

the pattern of the particular signal for the subframe is formed at a position at which the $i^{th}$ available column and the $f(i)^{th}$ available row intersect and at a position at which the $i^{th}$ available column and the $((f(i)+\lfloor M/2 \rfloor) \mod M)^{th}$ available row intersect.

**37.** The method of claim 22 or 23, wherein, when M = N, the first MxN modular sonar sequence corresponds to a "Costas array".

**38.** The method of claim 22 or 23, wherein, M = 12 and discriminable kinds of the second MxN modular sonar sequence correspond to one of 144, 24, 12, and 6.

**39.** The method of claim 22 or 23, wherein, when M = 12 and N = 12,
the first MxN modular sonar sequence is generated by the "Logarithmic Welch method" and corresponds to one of {12(=0),1,4,2,9,5,11,3,8,10,7,6} and {11,0,3,1,8,4,10,2,7,9,6,5}.

**40.** A transmitting apparatus comprising:

a scrambler for scrambling bits input in a form of codewords through channel coding in a downlink;
a modulation mapper for modulating the bits scrambled by the scrambler into a complex modulation symbol;
a layer mapper for mapping a complex modulation symbol to one or more transmission layers;
a precoder for precoding a complex modulation symbol in each transmission channel of an antenna port;
a resource element mapper for mapping a complex modulation symbol for each antenna port to a corresponding resource element; and
a positioning reference signal mapper for converting a generated first MxN modular sonar sequence to a second MxN modular sonar sequence according to system-specific information, forming a positioning reference signal pattern from a second M×(N-N') modular sonar sequence generated by truncating an end part having a length N' out of the second MxN modular sonar sequence having a length N, and mapping positioning reference signals.

**41.** A receiving apparatus comprising:

a reception processor for extracting positioning reference signals allocated to particular resource elements from a signal received through each antenna port;
a decoder for decoding the extracted positioning reference signals by using patterns of positioning reference signals specified for each cell formed from a modular sonar sequence; and
a controller for making a control to calculate a distance to the cell by using a relative arrival time of a signal from the cell through the decoded positioning reference signals or transmit the relative arrival time.

**42.** A method of generating a positioning reference signal pattern in an OFDM-based wireless communication system including one or more base stations and one or more UEs, each of the base station and UEs including one or more antennas and transmitting and receiving a particular signal including one or more symbols in resource blocks, each of the resource blocks including a plurality of OFDM subcarriers and a plurality of OFDM symbols in one time slot within a radio frame, the radio frame including a plurality of subframes, each of the subframes including two slots, the method comprising:

forming a basic positioning reference signal pattern in a 1/2 resource block including six OFDM subcarriers and two slots configuring one subframe by a particular sequence;
forming a positioning reference signal pattern by repeating the basic positioning reference signal pattern formed in the 1/2 resource block $2 \cdot N_{RB}^{DL}$ times along a frequency axis, wherein $N_{RB}^{DL}$ is the number of all resource blocks corresponding to a downlink system bandwidth; and
forming a positioning reference signal pattern differently along a time axis by differently allocating the basic positioning reference signal pattern formed in the 1/2 resource block to $N_{subframe}$ number of subframes for positioning at each particular period according to cell-specific information and subframe number for positioning while giving different $v_{shift}$ values, each of which corresponds to an equal-sized cyclic shift value along the frequency axis for the OFDM subcarrier position at which a positioning reference signal is formed in a symbol for the positioning reference signal.

**43.** The method of claim 42, wherein the formed positioning reference signal pattern corresponds to a position of

$a_{k,l}^{(p)}$, which is a symbol modulated into a complex value used as a symbol for a positioning reference signal for an antenna port *p,* in a resource grid corresponding to a two dimensional domain of frequency (subcarrier) and time (symbol), at the $n_s$ th slot of a subframe for each positioning, and

the method further comprises mapping a positioning reference signal sequence $r_{l,n_s}(m)$ to $a_{k,l}^{(p)}$ .

**44.** The method of claim 43, wherein the antenna port *p* corresponds to the 0th antenna port.

**45.** The method of claim 42, wherein forming of the basic positioning reference signal pattern in the 1/2 resource block comprises:

forming a primary basic positioning reference signal pattern at a position of a subcarrier corresponding to an $i^{th}$ value of a sequence in a frequency domain, with respect to each $i^{th}$ symbol from a final symbol in each of the two slots and the particular sequence having a length ofN, wherein $1 \leq i \leq N$ and

forming the basic positioning reference signal pattern by puncturing positioning reference signals at positions corresponding to resource elements, in which a Primary Synchronization Signal (PSS), a Secondary Synchronization Signal (SSS), and a Broadcast Channel (BCH) exist, a symbol axis, in which a Cell-specific Reference Signal (CRS) exists, and control areas including a Physical Downlink Control Channel (PDCCH), a Physical Hybrid-ARQ Indicator Channel (PHICH), and a Physical Control Format Indicator Channel (PCFICH) in the generated primary basic positioning reference signal pattern.

**46.** The method of claim 45, wherein the particular sequence having a length of N is {0,1,2,3,4,5,6} and N has a value 6.

**47.** The method of claim 42, wherein, in forming of the basic positioning reference signal pattern in the 1/2 resource block,

for v indicating a value for defining locations of different positioning reference signals in a frequency domain, $N_{symb}^{DL}$ indicating the number of all OFDM symbols in each slot in a downlink, and an $l^{th}$ OFDM symbol for a positioning reference signal at each $n_s^{th}$ slot,

the position in a resource grid corresponding to a two dimensional domain of frequency (subcarrier) and time (symbol), at which the basic positioning reference signal pattern is formed, is determined by using equations,

$$v = 5 - l + N_{CP}$$

$$l = N_{symb}^{DL} - i \quad \text{for } i = 1, 2, 4, \cdots, 4 + (n_s \bmod 2) + N_{CP}$$

$$N_{cp} = \begin{cases} 1 & \text{for normal CP} \\ 0 & \text{for extended CP} \end{cases}.$$

**48.** The method of claim 42, wherein, in forming of the basic positioning reference signal pattern in the 1/2 resource block,

for v indicating a value for defining locations of different positioning reference signals in a frequency domain, $N_{symb}^{DL}$ indicating the number of all OFDM symbols in each slot in a downlink, and an $l^{th}$ OFDM symbol for a positioning reference signal at each $n_s^{th}$ slot,

the position in a resource grid corresponding to a two dimensional domain of frequency (subcarrier) and time (symbol), at which the basic positioning reference signal pattern is formed, is determined by using equations,

$$v = 5 - l + N_{CP}$$

$$l = \begin{cases} 2,3,5,6 & \text{if } n_s \bmod 2 = 0 \text{ and } N_{CP} = 1 \\ 1,2,3,5,6 & \text{if } n_s \bmod 2 = 1 \text{ and } N_{CP} = 1 \\ 2,4,5 & \text{if } n_s \bmod 2 = 0 \text{ and } N_{CP} = 0 \\ 1,2,4,5 & \text{if } n_s \bmod 2 = 1 \text{ and } N_{CP} = 0 \end{cases}$$

$$N_{CP} = \begin{cases} 1 & \text{for normal CP} \\ 0 & \text{for extended CP} \end{cases}.$$

**49.** The method of claim 42, wherein, in forming of the positioning reference signal pattern,

$N_{RB}^{DL}$ for indicating the number of all resource blocks corresponding to a downlink system bandwidth, $N_{sc}^{RB}$ indicating the number of subcarriers in a single resource block, and a k$^{th}$ subcarrier in an entire system bandwidth including $N_{RB}^{DL} N_{sc}^{RB}$ number of subcarriers,

the position of an i$^{th}$ OFDM symbol, which corresponds to a symbol for a positioning reference signal at an $n_s$$^{th}$ slot, and a k$^{th}$ subcarrier in a resource grid corresponding to a two dimensional domain of frequency (subcarrier) and time (symbol), at which the positioning reference signal pattern is formed, is determined by using equations,

$$k = 6m + \left( v + v_{shift} \right) \bmod 6$$

$$m = 0, 1, \ldots, 2 \cdot N_{RB}^{DL} - 1.$$

**50.** The method of claim 49, wherein $v_{shift}$ corresponds to a remainder remaining after dividing a value, which is generated by a function of a subframe number and cell-specific information, by 6, which corresponds to a maximum available frequency shift value, and
$v_{shift}$ is obtained by deriving one or more pseudo-random sequence values from a pseudo-random sequence, which is generated with cell-specific information as an initial value, by a function of positioning subframe numbers, multiplying the derived pseudo-random sequence values by a predetermined constant, calculating a sum of the multiplied values, and then obtaining a remainder remaining after dividing the sum by 6, which corresponds to a maximum available frequency shift value.

**51.** The method of claim 49, wherein $v_{shift}$ is obtained by an equation,

$$v_{shift} = f\left( n_{subframe}, N_{cell}^{ID} \right) \rightarrow v_{shift} = \left( \sum_i a^i \cdot c\left( f\left( n_{subframe}, i \right) \right) \right) \bmod 6$$,

wherein $0 \leq N_{Cell}^{ID} < 504$, $N_{ID}^{cell}$ corresponds to a physical cell identifier (ID), $a$ is a predetermined constant,

$c(i)$ indicates a pseudo-random sequence, $c$ has an initial value of $c_{init} = N_{Cell}^{ID}$, and $c$ is initialized at each subframe for positioning.

**52.** The method of claim 42, wherein the particular period corresponds to a period of 16, 32, 64, or 128 frames.

**53.** The method of claim 42, wherein the $N_{subframe}$ number corresponds to one, two, four, or six, and the $N_{subframe}$ number of subframes are sequentially located at an initial part of a particular frame including the subframes to which the positioning reference signals have been allocated.

**54.** The method of claim 53, wherein the subframes to which the positioning reference signals have been allocated are subframes corresponding to 0.1% ~ 1% of all frames of the particular period.

**55.** A method of allocating a signal pattern in an OFDM-based wireless communication system including one or more base stations and one or more UEs, each of the base station and UEs including one or more antennas and transmitting and receiving a particular signal including one or more symbols in resource blocks, each of the resource blocks including a plurality of OFDM subcarriers and a plurality of OFDM symbols in one time slot within a radio frame, the radio frame including a plurality of subframes, the method comprising:

generating a first MxN modular sonar sequence based on determined M and N;
converting the generated first MxN modular sonar sequence to a second MxN modular sonar sequence according to system-specific information for an $n_{subframe}$ th subframe, wherein $0 \leq n_{subframe} < N_{subframe}$, and $N_{subframe}$ is a natural number larger than or equal to 1;
generating a second $M \times (N-N')$ modular sonar sequence by truncating an end part having a length N' ($0 \leq N' \leq N-1$) out of the second MxN modular sonar sequence having a length N;
forming a pattern of the particular signal from the second $M \times (N-N')$ modular sonar sequence for the $n_{subframe}$ th subframe; and
allocating the pattern of the particular signal formed for the $n_{subframe}$ th subframe to the $n_{subframe}$ th subframe of $N_{subframe}$ number of subframes in each particular frame of a particular period.

**56.** The method of claim 55, wherein the particular signal is a signal transmitted at a particular time and in a particular frequency band for at least one of channel estimation, position estimation, transmission and reception of control information, and transmission and reception of feedback information, which are necessary for wireless communication between a UE and a base station.

**57.** The method of claim 55, wherein the particular signal is a positioning reference signal for positioning a UE.

**58.** The method of claim 55, wherein the particular period corresponds to a period of 16, 32, 64, or 128 frames.

**59.** The method of claim 55, wherein the $N_{subframe}$ number corresponds to one, two, four, or six, and the $N_{subframe}$ number of subframes are sequentially located at an initial part of a particular frame including the subframes to which the positioning reference signals have been allocated.

**60.** The method of claim 59, wherein the subframes to which the positioning reference signals have been allocated are subframes corresponding to 0.1% ~ 1% of all frames of the particular period.

**61.** The method of claim 55, wherein subframes of a particular frame, to which formed patterns are allocated, use all or a part of a bandwidth in a frequency axis.

**62.** The method of claim 55, wherein, in converting of the generated first MxN modular sonar sequence to the second MxN modular sonar sequence according to the system-specific information for the $n_{subframe}$ th subframe, the first MxN modular sonar sequence is converted to the second MxN modular sonar sequence by using a frequency axis cyclic shift value and a time axis cyclic shift value, which have different values according to the system-specific information.

**63.** The method of claim 55, wherein the patterns allocated to the $N_{subframe}$ number of subframes are either equal to each other or at least partially different from each other.

**64.** The method of claim 63, wherein, when the patterns allocated to the $N_{subframe}$ number of subframes are different from each other and a quotient of a division of t by M is $\lfloor t/M \rfloor$ and a remainder of the division is (t mod M), in converting of the generated first MxN modular sonar sequence to the second MxN modular sonar sequence for the $n_{subframe}$ th subframe,

the first MxN modular sonar sequence is converted to a $t^{th}$ ($0 \leq t < T = 2M$) second MxN modular sonar sequence ($f_{n_{subframe},t}(i)$, $0 \leq i < N$) by an equation, $f_{n_{subframe},t}(i) = (f_0((i + n_{subframe} + 6 \cdot {}_L t/M \rfloor) \bmod N) + (t \bmod M)) \bmod M$, $0 \leq i < N$, or an equation, $f_{n_{subframe},t}(i) = (f_0((i + {}_L t/M \rfloor + 2 \cdot n_{subframe}) \bmod N) + (t \bmod M)) \bmod M$, $0 \leq i < N$.

65. The method of claim 63, wherein, when the patterns allocated to the $N_{subframe}$ number of subframes are different from each other and a remainder of a division of t by M is (t mod M), in converting of the generated first MxN modular sonar sequence to the second MxN modular sonar sequence for the $n_{subframe}{}^{th}$ subframe,
the first MxN modular sonar sequence is converted to a $t^{th}$ ($0 \leq t < T = M$) second MxN modular sonar sequence ($f_{nsubfrme,t}(i)$, $0 \leq i < N$) by an equation, $f_{n_{subframe},t}(i) = (f_0((i + 2 \cdot n_{subframe}) \bmod N) + (t \bmod M)) \bmod M$, $0 \leq i < N$.

66. The method of claim 63, wherein, when the patterns allocated to the $N_{subframe}$ number of subframes are different from each other and a remainder of a division of t by M is (t mod M), in converting of the generated first MxN modular sonar sequence to the second MxN modular sonar sequence for the $n_{subframe}{}^{th}$ subframe,
the first MxN modular sonar sequence is converted to a $t^{th}$ ($0 \leq t < T = {}_L M/2 \rfloor$) second MxN modular sonar sequence ($f_{n_{subframe},t}(i)$, $0 \leq i < N$) by an equation, $f_{n_{subframe},t}(i) = (f_0((i + 2 \cdot n_{subframe}) \bmod N) + (t \bmod M)) \bmod M$, $0 \leq i < N$.

67. The method of claim 64, wherein generating of the second $M \times (N-N')$ modular sonar sequence comprises generating a $t^{th}$ ($0 \leq t < T = 2M$) second $M \times (N-N')$ modular sonar sequence ($f_{n_{subframe},t}'(i)$, $0 \leq i < N-N'$) by truncating an end part having a length N' ($0 \leq N' \leq N-1$) out of the second MxN modular sonar sequence having a length N by $f_{n_{subframe},t}'(i) = f_{n_{subframe},t}(i)$ for $0 \leq i < N-N'$ for the $n_{subframe}{}^{th}$ subframe, and
forming of the pattern of the particular signal from the second $Mx(N-N')$ modular sonar sequence for the $n_{subframe}{}^{th}$ subframe comprises forming the pattern of the particular signal at all points, at which an $i^{th}$ available symbol axis and an $f_{n_{subframe},t}'(i)$th available subcarrier axis intersect, for $0 \leq i < N-N'$ ($0 = N-N' \bmod (N-N')$) and the $n_{subframe}{}^{th}$ subframe in a two dimensional structure including $M \times (N-N')$ subcarriers and symbols from the second $M \times (N-N')$ modular sonar sequence.

68. The method of claim 65, wherein generating of the second $M \times (N-N')$ modular sonar sequence comprises generating a $t^{th}$ ($0 \leq t < T = M$) second $M \times (N-N')$ modular sonar sequence ($f_{n_{subframe},t}'(i)$, $0 \leq i < N-N'$) by truncating an end part having a length N' ($0 \leq N' \leq N-1$) out of the second MxN modular sonar sequence having a length N by $f_{n_{subframe},t}'(i) = f_{n_{subframe},t}(i)$ for $0 \leq i < N-N'$ for the $n_{subframe}{}^{th}$ subframes, and
forming of the pattern of the particular signal from the second $M \times (N-N')$ modular sonar sequence for the $n_{subframe}{}^{th}$ subframe comprises forming the pattern of the particular signal at all points, at which an $i^{th}$ available symbol axis and an $f_{n_{subframe},t}'(i)$th available subcarrier axis intersect, for $0 \leq i < N-N'$ ($0 = N-N' \bmod (N-N')$) and the $n_{subframe}{}^{th}$ subframe in a two dimensional structure including $M \times (N-N')$ subcarriers and symbols from the second $M \times (N-N')$ modular sonar sequence.

69. The method of claim 64, wherein generating of the second $M \times (N-N')$ modular sonar sequence comprises generating a $t^{th}$ ($0 \leq t < T = {}_L M/2 \rfloor$) second $M \times (N-N')$ modular sonar sequence ($f_{n_{subframe},t}'(i)$, $0 \leq i < N-N'$) by truncating an end part having a length N' ($0 \leq N' \leq N-1$) out of the second MxN modular sonar sequence having a length N by $f_{n_{subframe},t}'(i) = f_{nsubframe,t}(i)$ for $0 \leq i < N- N'$ for the $n_{subframe}{}^{th}$ subframe, and
forming of the pattern of the particular signal from the second $M \times (N-N')$ modular sonar sequence for the $n_{subframe}{}^{th}$ subframe comprises forming the pattern of the particular signal at all points, at which an $i^{th}$ available symbol axis and an $f_{n_{subframe},t}'(i)$th available subcarrier axis intersect, and at all points, at which an $i^{th}$ available symbol axis and an ($f_{n_{subframe},t}(i) + {}_L M/2 \rfloor$)mod $M$th available subcarrier axis intersect, for $0 \leq i < N-N'$($0 = N-N' \bmod (N-N')$) and the $n_{subframe}{}^{th}$ subframe in a two dimensional structure including $M \times (N-N')$ subcarriers and symbols from the second $M \times (N-N')$ modular sonar sequence.

70. The method of claim 55, wherein, in allocating of the pattern to the $n_{subframe}{}^{th}$ subframe of $N_{subframe}$ number of subframes, when the $N_{subframe}$ number is an even number larger than or equal to 4, the particular signal is allocated in an equal pattern to even subframes and odd subframes, respectively.

71. The method of claim 55, wherein, when M = 12 and N = 12,
the first MxN modular sonar sequence is generated by the "Logarithmic Welch method" and corresponds to one of {12(=0),1,4,2,9,5,11,3,8,10,7,6} and {11,0,3,1,8,4,10,2,7,9,6,5}.

72. The method of claim 55, wherein, when M = N, the first MxN modular sonar sequence corresponds to a "Costas array".

73. A transmitting apparatus comprising:

a scrambler for scrambling bits input in a form of codewords through channel coding in a downlink;
a modulation mapper for modulating the bits scrambled by the scrambler into a complex modulation symbol;
a layer mapper for mapping a complex modulation symbol to one or more transmission layers;
a precoder for precoding a complex modulation symbol in each transmission channel of an antenna port;
a resource element mapper for mapping a complex modulation symbol for each antenna port to a corresponding resource element; and
a positioning reference signal mapper for converting a generated first MxN modular sonar sequence to a second MxN modular sonar sequence according to system-specific information for an $n_{subframe}$th subframe ($0 \leq n_{subframe} <$ $N_{subfame}$, and $N_{subframe}$ is a natural number larger than or equal to 1), generating a second $M \times (N-N')$ modular sonar sequence by truncating an end part having a length N' ($0 \leq N' \leq N-1$) out of the second MxN modular sonar sequence having a length N, forming a pattern of the particular signal from the second $M \times (N-N')$ modular sonar sequence, and allocating the formed pattern of the particular signal to the $n_{subframe}$th subframe of $N_{subframe}$ number of subframes in each particular frame of a particular period.

**74.** A receiving apparatus comprising:

a reception processor for extracting positioning reference signals allocated to particular resource elements from a signal received through each antenna port;
a decoder for decoding the extracted positioning reference signals by using patterns of positioning reference signals specified for each cell formed from a modular sonar sequence; and
a controller for making a control to calculate a distance to the cell by using a relative arrival time of a positioning reference signal power from the cell through the decoded positioning reference signals or transmit the relative arrival time.

**75.** The receiving apparatus of claim 74, wherein, when the positioning reference signals are included in two or more subframes, the controller measures the relative arrival time of the positioning reference signal power from the cell based on simultaneously accumulated patterns of the positioning reference signals of the subframes.

**76.** The receiving apparatus of claim 74, wherein, when the positioning reference signals are included in two or more subframes, the controller measures the relative arrival time of the positioning reference signal power from the cell by individually measuring the relative arrival time of each signal power of the positioning reference signals of each subframe.

*FIG.1*

```
                                                112
   ┌──────────────────────────────────┐
   │   MODULAR SONAR SEQUENCE         │
   │   SIZE (M, N) DETERMINATOR       │
   └──────────────────────────────────┘
                    │
                    ▼
                                                110                        120
   ┌──────────────────────────────────┐         ┌──────────────────────────────┐
   │   M x N MODULAR SONAR            │────────▶│       PRS MAPPER             │
   │   SEQUENCE GENERATOR            │         └──────────────────────────────┘
   └──────────────────────────────────┘
                    ▲
                    │
                                                114
   ┌──────────────────────────────────┐
   │   SYSTEM-SPECIFIC                │
   │   INFORMATION MAPPER             │
   └──────────────────────────────────┘
```

# FIG.2

| | | | | | | | | | | | |
|---|---|---|---|---|---|---|---|---|---|---|---|
| C | T |   |   |   |   |   |   |   |   |   |   |
| T | T |   |   |   |   |   |   |   |   |   |   |
| T | T |   |   |   |   | P |   |   |   |   |   |
| T | T |   |   |   |   |   | P |   |   |   |   |
| T | T |   |   | P |   |   |   |   |   |   |   |
| T | T |   |   |   |   |   |   | P |   |   |   |
| C | T |   |   |   |   |   |   |   |   | P |   |
| T | T |   |   |   | P |   |   |   |   |   |   |
| T | T |   | P |   |   |   |   |   |   |   |   |
| T | T |   |   |   |   |   |   |   | P |   |   |
| T | T | P |   |   |   |   |   |   |   |   |   |
| T | T |   |   |   |   |   |   |   |   |   | P |

C   CRS

T   Control region

P   PRS

# *FIG.3*

| C | T |   |   |   |   |   |   |   |   |   |   |
|---|---|---|---|---|---|---|---|---|---|---|---|
| T | T |   |   |   |   |   |   |   |   |   | P |
| T | T |   |   |   |   |   |   |   |   |   |   |
| T | T |   |   |   |   | P |   |   |   |   |   |
| T | T |   |   |   |   |   | P |   |   |   |   |
| T | T |   |   | P |   |   |   |   |   |   |   |
| C | T |   |   |   |   |   |   | P |   |   |   |
| T | T |   |   |   |   |   |   |   |   | P |   |
| T | T |   |   |   | P |   |   |   |   |   |   |
| T | T |   | P |   |   |   |   |   |   |   |   |
| T | T |   |   |   |   |   |   |   | P |   |   |
| T | T | P |   |   |   |   |   |   |   |   |   |

| C | CRS |
|---|-----|

| T | Control region |
|---|----------------|

| P | PRS |
|---|-----|

# FIG.4

| C | T |   |   |   |   |   |   |   |   |   |   |
|---|---|---|---|---|---|---|---|---|---|---|---|
| T | T |   |   |   |   |   |   |   |   |   |   |
| T | T |   |   |   |   |   | P |   |   |   |   |
| T | T |   |   |   |   |   |   | P |   |   |   |
| T | T |   |   |   | P |   |   |   |   |   |   |
| T | T |   |   |   |   |   |   |   | P |   |   |
| C | T |   |   |   |   |   |   |   |   |   | P |
| T | T |   |   |   |   | P |   |   |   |   |   |
| T | T |   |   | P |   |   |   |   |   |   |   |
| T | T |   |   |   |   |   |   |   |   | P |   |
| T | T |   | P |   |   |   |   |   |   |   |   |
| T | T | P |   |   |   |   |   |   |   |   |   |

- C  CRS
- T  Control region
- P  PRS
-    No Transmission

# EP 2 418 511 A1

FIG.5

| C | T | H | H | C | H | H | C | H | H | H | C | H | H |
|---|---|---|---|---|---|---|---|---|---|---|---|---|---|
| T | T |   |   | V |   |   | V |   |   |   | V |   |   |
| T | T |   |   | V |   |   | V |   |   |   | V |   | P |
| C | T | H | H | C | H | H | C | H | H | H | C | H | H |
| T | T |   |   | V |   |   | V |   | P |   | V |   |   |
| T | T |   |   | V |   | P | V |   |   |   | V |   |   |
| C | T |   |   | C |   |   | C |   |   |   | C | P |   |
| T | T | P |   | V |   |   | V |   |   |   | V |   |   |
| T | T |   |   | V |   |   | V |   |   | P | V |   |   |
| C | T |   | P | C |   |   | C |   |   |   | C |   |   |
| T | T |   |   | V | P |   | V |   |   |   | V |   |   |
| T | T |   |   | V |   |   | V | P |   |   | V |   |   |

C  CRS

T  Control region

P  PRS

H  non-available horizontal(row) axes for PRS

V  non-available vertical(column) axes for PRS

42

# *FIG.6*

| C | T | H | C | H | H | C | H | H | C | H | H |
|---|---|---|---|---|---|---|---|---|---|---|---|
| T | T |   | V |   |   | V |   |   | V |   |   |
| T | T |   | V |   |   | V |   | P | V |   |   |
| C | T | H | C | H | H | C | H | H | C | H | H |
| T | T |   | V |   | P | V |   |   | V |   |   |
| T | T |   | V |   |   | V |   |   | V |   | P |
| C | T | H | C | H | H | C | H | H | C | H | H |
| T | T |   | V |   |   | V | P |   | V |   |   |
| T | T |   | V |   |   | V |   |   | V | P |   |
| C | T | H | C | H | H | C | H | H | C | H | H |
| T | T | P | V |   |   | V |   |   | V |   |   |
| T | T |   | V | P |   | V |   |   | V |   |   |

| C | CRS |
|---|-----|

| T | Control region |
|---|-----|

| P | PRS |
|---|-----|

| H | non-available horizontal(row) axes for PRS |
|---|-----|

| V | non-available vertical(column) axes for PRS |
|---|-----|

# FIG.7

C CRS

T Control region

P PRS

# FIG.8

| C | T | | C | | | P | C | | | | C | | | |
|---|---|---|---|---|---|---|---|---|---|---|---|---|---|---|
| T | T | | V | | | | V | | | | V | | | P |
| T | T | | V | | | | V | | | P | V | | | |
| C | T | | C | P | | | C | | | | C | | | |
| T | T | | V | | | | V | P | | | V | | | |
| T | T | | V | | | | V | | | | V | P | | |
| C | T | | C | P | | | C | | | | C | | | |
| T | T | | V | | | | V | P | | | V | | | |
| T | T | | V | | | | V | | | P | V | | | |
| C | T | P | C | | | | C | | | | C | | | |
| T | T | | V | | | | V | | | | V | P | | |
| T | T | | V | | | P | V | | | | V | | | |

→ GROUP 2

→ GROUP 1

| C | CRS |

| T | Control region |

| P | PRS |

| V | non-available vertical(column) axes for PRS |

*FIG.9*

612

MODULAR SONAR SEQUENCE
SIZE (M, N) DETERMINATOR

610

M x N MODULAR SONAR
SEQUENCE GENERATOR

620

M x (N-N') MODULAR SONAR
SEQUENCE GENERATOR

630

PRS MAPPER

622

SYSTEM-SPECIFIC
INFORMATION MAPPER

# FIG.10

| C | T | P |   |   |   |   |   |   |   |   |   |
|---|---|---|---|---|---|---|---|---|---|---|---|
| T | T |   |   |   |   |   |   | P |   |   |   |
| T | T |   |   |   |   |   |   |   |   |   | P |
| T | T |   |   |   |   | P |   |   |   |   |   |
| T | T |   |   |   |   |   |   |   |   | P |   |
| T | T |   |   |   |   |   |   |   |   |   |   |
| C | T |   |   |   |   |   |   |   |   |   |   |
| T | T |   |   |   |   |   | P |   |   |   |   |
| T | T |   |   | P |   |   |   |   |   |   |   |
| T | T |   |   |   |   |   |   |   | P |   |   |
| T | T |   |   |   | P |   |   |   |   |   |   |
| T | T |   | P |   |   |   |   |   |   |   |   |

| C | CRS |
|---|-----|

| T | Control region |
|---|----------------|

| P | PRS |
|---|-----|

47

# *FIG.11*

| C | T | P |   | C |   |   |   | C |   |   |   | C |   |   |
|---|---|---|---|---|---|---|---|---|---|---|---|---|---|---|
| T | T |   |   | V |   |   |   | V |   |   | P | V |   |   |
| T | T |   |   | V |   |   |   | V |   |   |   | V |   |   |
| C | T |   |   | C |   |   |   | C | P |   |   | C |   |   |
| T | T |   |   | V |   |   |   | V |   |   |   | V |   | P |
| T | T |   |   | V |   |   |   | V |   |   |   | V |   |   |
| C | T |   |   | C |   |   |   | C |   |   |   | C |   |   |
| T | T |   |   | V |   |   |   | V |   | P |   | V |   |   |
| T | T |   |   | V | P |   |   | V |   |   |   | V |   |   |
| C | T |   |   | C |   |   |   | C |   |   |   | C | P |   |
| T | T |   |   | V |   | P |   | V |   |   |   | V |   |   |
| T | T |   | P | V |   |   |   | V |   |   |   | V |   |   |

- | C | CRS
- | T | Control region
- | P | PRS
- | V | non-available vertical(column) axes for PRS

# FIG.12

| C | T | P | C |   |   | C |   |   | C |   |   |
|---|---|---|---|---|---|---|---|---|---|---|---|
| T | T |   | V |   |   | V |   |   | V |   | P |
| T | T |   | V |   |   | V |   |   | V |   |   |
| C | T |   | C |   |   | C |   | P | C |   |   |
| T | T |   | V |   |   | V |   |   | V |   |   |
| T | T |   | V |   |   | V |   |   | V |   |   |
| C | T |   | C |   |   | C |   |   | C |   |   |
| T | T |   | V |   |   | V |   |   | V | P |   |
| T | T |   | V |   | P | V |   |   | V |   |   |
| C | T |   | C |   |   | C |   |   | C |   |   |
| T | T |   | V |   |   | V | P |   | V |   |   |
| T | T |   | V | P |   | V |   |   | V |   |   |

| C | CRS |
|---|---|

| T | Control region |
|---|---|

| P | PRS |
|---|---|

| V | non-available vertical(column) axes for PRS |
|---|---|

## FIG.13

| C | T |   |   |   |   |   |   |   |   |   |   |
|---|---|---|---|---|---|---|---|---|---|---|---|
| T | T |   |   |   |   |   |   |   |   |   |   |
| T | T |   | P |   |   |   |   |   |   |   |   |
| T | T |   |   |   |   |   |   |   | P |   |   |
| T | T |   |   |   |   |   |   |   |   | P |   |
| T | T |   |   |   | P |   |   |   |   |   |   |
| C | T | P |   |   |   |   |   |   |   |   |   |
| T | T |   |   | P |   |   |   |   |   |   |   |
| T | T |   |   |   |   |   |   | P |   |   |   |
| T | T |   |   |   |   | P |   |   |   |   |   |
| T | T |   |   |   |   |   |   |   |   |   | P |
| T | T |   |   |   |   |   | P |   |   |   |   |

C CRS

T Control region

P PRS

# *FIG.14*

| C | T |   |   | C |   |   | C |   |   |   | C |   |   |
|---|---|---|---|---|---|---|---|---|---|---|---|---|---|
| T | T |   |   | V |   |   | V |   |   |   | V |   |   |
| T | T |   |   | V |   |   | V |   |   |   | V |   |   |
| C | T |   |   | C |   |   | C |   |   |   | C | P |   |
| T | T |   |   | V |   |   | V |   |   |   | V |   | P |
| T | T |   |   | V |   | P | V |   |   |   | V |   |   |
| C | T | P |   | C |   |   | C |   |   |   | C |   |   |
| T | T |   |   | V | P |   | V |   |   |   | V |   |   |
| T | T |   |   | V |   |   | V |   |   | P | V |   |   |
| C | T |   | P | C |   |   | C | P |   |   | C |   |   |
| T | T |   |   | V |   |   | V |   |   |   | V |   |   |
| T | T |   |   | V |   |   | V |   | P |   | V |   |   |

$\boxed{C}$  CRS

$\boxed{T}$  Control region

$\boxed{P}$  PRS

$\boxed{V}$  non-available vertical(column) axes for PRS

# FIG.15

| C | T |   | C |   |   | C |   |   | C |   |   |
|---|---|---|---|---|---|---|---|---|---|---|---|
| T | T |   | V |   |   | V |   |   | V |   |   |
| T | T |   | V | P |   | V |   |   | V |   |   |
| C | T |   | C |   |   | C |   |   | C |   |   |
| T | T |   | V |   |   | V |   |   | V |   |   |
| T | T |   | V |   |   | V | P |   | V |   |   |
| C | T | P | C |   |   | C |   |   | C |   |   |
| T | T |   | V |   | P | V |   |   | V |   |   |
| T | T |   | V |   |   | V |   |   | V |   | P |
| C | T |   | C |   |   | C |   | P | C |   |   |
| T | T |   | V |   |   | V |   |   | V |   |   |
| T | T |   | V |   |   | V |   |   | V | P |   |

☐C CRS

☐T Control region

☐P PRS

☐V non-available vertical(column) axes for PRS

## FIG.16

N<sub>SUBFRAME</sub> SUBFRAME WITH PRS
{$N_{SUBFRAME}$=1,2,4,6}

ONE RESOURCE BLOCK

50 RESOURCE BLOCKS

10 SUBFRAMES

C  CRS

T  CONTROL REGION

P  PRS

| #0 | ●●●●● | #K | ●●●●● | #Z-1 | #0 | |

RADIO FRAME

Z=16,32,64,128

## FIG.17

<u>900</u>

# FIG.18

1000

| 1010 | 1012 | 1014 |

RECEPTION PROCESSOR — DECODER — CONTROLLER

## FIG.19

TIME(SYMBOL)

P PRS

<NORMAL CP>

TIME(SYMBOL)

P PRS

<EXTENDED CP>

# FIG.20

TIME(SYMBOL)

EVEN SLOT — ODD SLOT

| P | PRS | <NORMAL CP> |

| O | OAS |

| T | CONTROL REGION |

| V | NON-AVAILABLE VERTICAL(COLUMN) AXES FOR PRS |

TIME(SYMBOL)

EVEN SLOT — ODD SLOT

| P | PRS | <EXTENDED CP> |

| O | OAS |

| T | CONTROL REGION |

| V | NON-AVAILABLE VERTICAL(COLUMN) AXES FOR PRS |

| INTERNATIONAL SEARCH REPORT | International application No. |
|---|---|
| | **PCT/KR2009/005840** |

**A.    CLASSIFICATION OF SUBJECT MATTER**

***G01S 15/06(2006.01)i, H04J 11/00(2006.01)i***

According to International Patent Classification (IPC) or to both national classification and IPC

**B.    FIELDS SEARCHED**

Minimum documentation searched (classification system followed by classification symbols)
G01S 15/06; H04B 10/04; H04B 3/10; H04J; H04J 11/00; H04L 27/26; H04L 27/38

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: "Orthogonal, Frequency, Division, Multiplexing, Reference, Signal"

**C.    DOCUMENTS CONSIDERED TO BE RELEVANT**

| Category* | Citation of document, with indication, where appropriate, of the relevant passages | Relevant to claim No. |
|---|---|---|
| A | WO 98-34382 A1 (NDS LIMITED) 06 August 1998<br>Abstract, figures 1 to 4, claim 1 | 1-76 |
| A | WO 98-37649 A2 (NDS LIMITED) 27 August 1998<br>Abstract, figures 1, 2 | 1-76 |
| A | US 2005-0180760 A1 (RICARDO FECED et al.) 18 August 2005<br>Abstract, figures 1 to 10, claim 1 | 1-76 |
| A | US 2007-0030798 A1 (Takahiro Okda) 08 February 2007<br>Abstract, figures 1, 2, 9, 11, 12, 13 | 1-76 |

☐  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 JUNE 2010 (16.06.2010) | **17 JUNE 2010 (17.06.2010)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2009/005840**

| Patent document cited in search report | Publication date | Patent family member | Publication date |
|---|---|---|---|
| WO 98-34382 A1 | 06.08.1998 | AU 5874598 A | 25.08.1998 |
| | | EP 0956684 A1 | 21.03.2001 |
| | | EP 0956684 A1 | 17.11.1999 |
| | | GB 9701984 D0 | 19.03.1997 |
| | | ZA9800803A | 30.07.1998 |
| WO 98-37649 A2 | 27.08.1998 | AU 6300498 A | 09.09.1998 |
| | | EP 0962083 A2 | 20.06.2001 |
| | | EP 0962083 A2 | 08.12.1999 |
| | | GB 9703634 D0 | 09.04.1997 |
| | | WO 98-37649A3 | 17.12.1998 |
| US 2005-0180760 A1 | 18.08.2005 | US 7469106 B2 | 23.12.2008 |
| US 2007-0030798 A1 | 08.02.2007 | CN 1897586 A | 17.01.2007 |
| | | CN 1897586 C0 | 17.01.2007 |
| | | EP 1744513 A2 | 17.01.2007 |
| | | JP 04-297093 B2 | 24.04.2009 |
| | | JP 2007-028201 A | 01.02.2007 |
| | | JP 4297093 B2 | 15.07.2009 |
| | | KR 10-2007-0009418 A | 18.01.2007 |
| | | KR20070009418A | 18.01.2007 |
| | | US 7724694 B2 | 25.05.2010 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090031548
- KR 1020090038564
- KR 1020090056705
- KR 1020090056708
- KR 1020090059978